# EUROPEAN PATENT APPLICATION

(11) **EP 4 270 847 A2**
(43) Date of publication of application: **01.11.2023**
(21) Application number: 23169745.9
(22) Date of filing: 25.04.2023
(51) Int. Cl.: H04L 5/00, H04L 5/14, H04W 72/0453

(54) **TRANSMISSION DIRECTION SETTING METHOD, USER EQUIPMENT, NETWORK DEVICE**

(30) Priority: 28.04.2022 US 202263336229 P; 18.04.2023 US 202318302000
(71) Applicant: Acer Incorporated, New Taipei City 221 (TW)
(72) Inventor: CHEN, Jen-Hsien, c/o Acer Incorporated, New Taipei City 221, Taiwan (R.O.C.) (TW); LEE, Chien-Min, c/o Acer Incorporated, New Taipei City 221, Taiwan (R.O.C.) (TW); LO, Li-Chung, c/o Acer Incorporated, New Taipei City 221, Taiwan (R.O.C.) (TW)
(74) Representative: Haseltine Lake Kempner LLP

(57) **Abstract**

A transmission direction setting method, a user equipment, UE, (120, 3500), and a network device (110, 3500) are provided. In the method adapted for a UE (120, 3500), receiving a first configuration to indicate a first transmission direction for a frequency range (FR) within a time unit (TU, TU1, TU2); receiving a second configuration to indicate a second transmission direction for a frequency segmentation (FS1, FS2, FS12, FS22) within the time unit (TU, TU1, TU2); and determining a third transmission direction for the frequency segmentation (FS1, FS2, FS12, FS22) according to the second transmission direction. The frequency segmentation (FS1, FS2, FS12, FS22) consists of one resource block, RB, or a set of consecutive RBs and is a part of the frequency range (FR).

## Description

### TECHNICAL FIELD

The present disclosure generally relates to a transmission direction setting method, a user equipment, and a network device.

### BACKGROUND

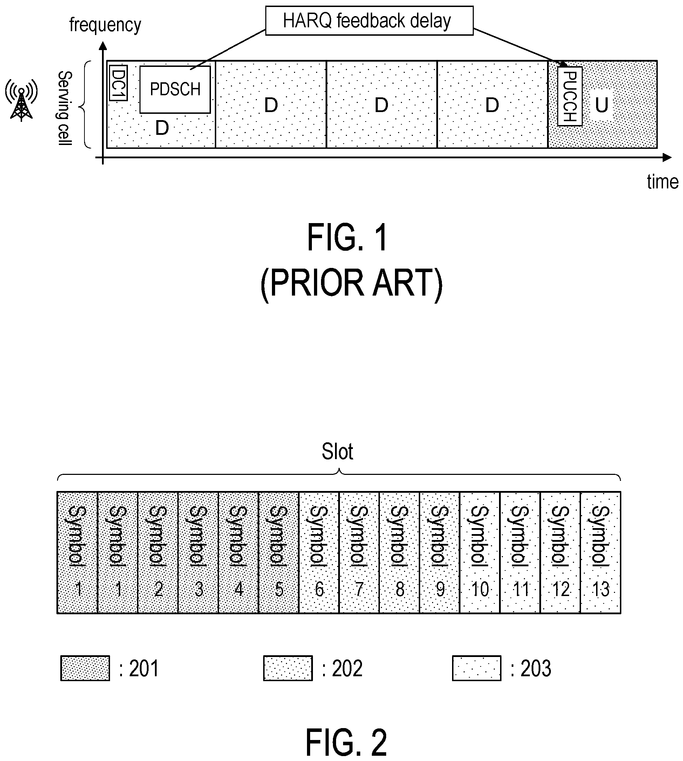

In time division duplex (TDD), the time domain resource could be allocated for downlink or uplink transmission. However, the allocation of a limited time duration for the uplink in TDD would result in reduced coverage and increased latency. For example, FIG. 1 is a schematic diagram that illustrates an example of latency. Referring to FIG. 1, "D" stands for downlink (DL), and "U" stands for uplink (UL). The transmission directions for multiple timeslots are set as shown in FIG. 1. That is whole severing cell is allocated for a single transmission direction within one timeslot. If a physical downlink shared channel (PDSCH) is transmitted, a base station may wait for three timeslots, and then a hybrid automatic repeat request (HARQ) feedback would be received on a physical uplink control channel (PUCCH). Furthermore, if UL data would like to be transmitted, the base station has to schedule a UL resource by a downlink control information (DCI) for the UL data, in which the UL resource is at a duration of four timeslots away from the timeslot where the DCI is scheduled, so as to UL latency issue.

### SUMMARY

Exemplary embodiments of the disclosure provide a transmission direction setting method, a user equipment (UE), and a network device.

According to one or more exemplary embodiments of the disclosure, a transmission direction setting method is adapted for a UE. The method comprises: receiving a first configuration to indicate a first transmission direction for a frequency range within a time unit; receiving a second configuration to indicate a second transmission direction for a frequency segmentation within the time unit; determining a third transmission direction for the frequency segmentation according to the second transmission direction. The frequency segmentation consists of one resource block (RB) or a set of consecutive RBs and is a part of the frequency range.

According to one or more exemplary embodiments of the disclosure, a UE comprises a transceiver, a memory, and a processor. The transceiver is used for transmitting or receiving signals. The memory is used for storing a program code. The processor is coupled to the transceiver and the memory. The processor is configured for executing the program to: receive, through the transceiver, a first configuration to indicate a first transmission direction for a frequency range within a time unit; receive, through the transceiver, a second configuration to indicate a second transmission direction for a frequency segmentation within the time unit, where the frequency segmentation consists of one resource block (RB) or a set of consecutive RBs and is a part of the frequency range; and determine a third transmission direction for the frequency segmentation according to the second transmission direction.

According to one or more exemplary embodiments of the disclosure, a transmission direction setting method is adapted for a network device. The method comprises: transmitting a first configuration to indicate a first transmission direction for a frequency range within a time unit; transmitting a second configuration to indicate a second transmission direction for a frequency segmentation within the time unit; and determining a third transmission direction for the frequency segmentation according to the second transmission direction. The frequency segmentation consists of one resource block (RB) or a set of consecutive RBs and is a part of a frequency range.

According to one or more exemplary embodiments of the disclosure, a network device comprises a transceiver, a memory, and a processor. The transceiver is used for transmitting or receiving signals. The memory is used for storing a program code. The processor is coupled to the transceiver and the memory. The processor is configured for executing the program to: transmit, through the transceiver, a first configuration to indicate a first transmission direction for a frequency range within a time unit; transmit, through the transceiver, a second configuration to indicate a second transmission direction for a frequency segmentation within the time unit, where the frequency segmentation consists of one resource block (RB) or a set of consecutive RBs and is a part of a frequency range; and determine a third transmission direction for the frequency segmentation according to the second transmission direction.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram that illustrates an example of latency.
FIG. 2 is a schematic diagram that illustrates a slot configuration.
FIG. 3 is a schematic diagram that illustrates a pattern of *tdd-UL-DL-ConfigurationCommon.*
FIG. 4 is a schematic diagram that illustrates two patterns of *tdd-UL-DL-ConfigurationCommon.*
FIG. 5A and FIG. 5B are schematic diagrams that show pattern change of *tdd-UL-DL-ConfigurationDedicated.*
FIG. 6 is a schematic diagram that illustrates transmission directions configurated by downlink control information (DCI).
FIG. 7A is a schematic diagram that illustrates reception limitations of a flexible resource at DL part with detecting DCI format 2_0.
FIG. 7B is a schematic diagram that illustrates transmission limitations of a flexible resource at UL part with detecting DCI format 2_0.
FIG. 8 is a schematic diagram that illustrates transmission and reception without detecting DCI format 2_0.
FIG. 9 is a schematic diagram that illustrates a communication system according to an exemplary embodiment of the present disclosure.
FIG. 10 is a flow chart of a transmission direction setting method according to an exemplary embodiment of the present disclosure.
FIG. 11 is a schematic diagram that illustrates a transmission direction setting of a first configuration according to an exemplary embodiment of the present disclosure.
FIG. 12 is a schematic diagram that illustrates a transmission direction setting of a second configuration according to an exemplary embodiment of the present disclosure.
FIG. 13 is a schematic diagram that illustrates frequency segmentations according to an exemplary embodiment of the present disclosure.
FIG. 14 is a schematic diagram that illustrates frequency segmentations indicated by resource block (RB) indexes according to an exemplary embodiment of the present disclosure.
FIG. 15A is a schematic diagram that illustrates a transmission direction setting of *tdd-UL-DL-ConfigurationCommon* with RB indexes according to an exemplary embodiment of the present disclosure.
FIG. 15B is a schematic diagram that illustrates a transmission direction setting *of tdd-UL-DL-ConfigurationDedicated_duplex* with RB indexes according to an exemplary embodiment of the present disclosure.
FIG. 15C is a schematic diagram that illustrates a transmission direction setting of *tdd-UL-DL-ConfigurationDedicated_duplex* with the lowest RB index according to an exemplary embodiment of the present disclosure.
FIG. 15D is a schematic diagram that illustrates a transmission direction setting of *tdd-UL-DL-ConfigurationDedicated_duplex* with the highest RB index according to an exemplary embodiment of the present disclosure.
FIG. 15E is a schematic diagram that illustrates a transmission direction setting *of tdd-UL-DL-ConfigurationCommon* for bandwidth parts (BWPs) according to an exemplary embodiment of the present disclosure.
FIG. 15F is a schematic diagram that illustrates a transmission direction setting *of tdd-UL-DL-ConfigurationDedicated_*for BWP according to an exemplary embodiment of the present disclosure.
FIG. 16 is a schematic diagram that illustrates a resource allocation with multiple flexible resources for BWP according to an exemplary embodiment of the present disclosure.
FIG. 17A is a schematic diagram that illustrates a slot format indication by *tdd-UL-DL-ConfigurationCommon* according to an exemplary embodiment of the present disclosure.
FIG. 17B is a schematic diagram that illustrates a slot format indication by *tdd-UL-DL-ConfigurationDedicated* according to an exemplary embodiment of the present disclosure.
FIG. 18A to FIG. 18C are schematic diagrams that illustrate a slot format indication by DCI format 2_0 according to an exemplary embodiment of the present disclosure.
FIG. 19A and FIG. 19B are schematic diagrams that illustrate a slot format indication by DCI format 2_0 for BWP according to an exemplary embodiment of the present disclosure.
FIG. 20A is a schematic diagram that illustrates an enhanced slot format table according to an exemplary embodiment of the present disclosure.
FIG. 20B is a schematic diagram that illustrates another enhanced slot format table according to an exemplary embodiment of the present disclosure.
FIG. 21A is a schematic diagram that illustrates a blank source according to an exemplary embodiment of the present disclosure.
FIG. 21B is a schematic diagram that illustrates a reception limitation on a blank source according to an exemplary embodiment of the present disclosure.
FIG. 22 is a schematic diagram that illustrates a blank pattern according to an exemplary embodiment of the present disclosure.
FIG. 23 is a schematic diagram that illustrates another blank pattern according to an exemplary embodiment of the present disclosure.
FIG. 24 is a schematic diagram that illustrates a transmission direction setting according to an exemplary embodiment of the present disclosure.
FIG. 25 is a schematic diagram that illustrates a reception limitation on a flexible resource according to an exemplary embodiment of the present disclosure.
FIG. 26 is a schematic diagram that illustrates another reception limitation on a flexible resource according to an exemplary embodiment of the present disclosure.
FIG. 27 is a schematic diagram that illustrates a transmission limitation on a flexible resource according to an exemplary embodiment of the present disclosure.
FIG. 28 is a schematic diagram that illustrates a transmission direction setting for BWP according to an exemplary embodiment of the present disclosure.
FIG. 29 is a schematic diagram that illustrates a BWP-specific UL-DL configuration according to an exemplary embodiment of the present disclosure.
FIG. 30 is a schematic diagram that illustrates a BWP-specific slot format indicator (SFI) configuration according to an exemplary embodiment of the present disclosure.
FIG. 31A and FIG. 31B are schematic diagrams that illustrate cell-specific/UE-specific UL-DL configuration according to an exemplary embodiment of the present disclosure.
FIG. 32 is a schematic diagram that illustrates a dynamic indication according to an exemplary embodiment of the present disclosure.
FIG. 33 is a flow chart of a transmission direction setting method according to an exemplary embodiment of the present disclosure.
FIG. 34A is a schematic diagram that illustrates latency reduction according to an exemplary embodiment of the present disclosure.
FIG. 34B is a schematic diagram that illustrates scheduling reduction and coverage enhancement according to an exemplary embodiment of the present disclosure.
FIG. 35 is a block diagram that illustrates a communication device according to an exemplary embodiment of the present disclosure.

### DESCRIPTION OF THE EMBODIMENTS

Some related technologies are introduced first.

FIG. 2 is a schematic diagram that illustrates a slot configuration. Referring to FIG. 2, a slot format may include downlink (DL) symbols 201, flexible symbols 202, and uplink (UL) symbols 203. The following may be applicable for each serving cell: *tdd-UL-DL-ConfigurationCommon* (carried by radio resource control (RRC) message), *tdd-UL-DL-ConfigurationDedicated* (carried by RRC message), and slot format indicator (SFI)-Radio Network Temporary Identifier (RNTI) (carried by RRC message and used to receive downlink control information (DCI) such as DCI format 2_0).

The *tdd-UL-DL-ConfigurationCommon* is a cell-specific configuration. If a UE is provided a higher layer parameter *tdd-UL-DL-ConfigurationCommon,* the UE may set the slot format per slot over a number of slots as indicated by the higher layer parameter *tdd-UL-DL-ConfigurationCommon.* The higher layer parameter *tdd-UL-DL-ConfigurationCommon* may provide: a reference subcarrier spacing configuration *µ_ref,* a higher layer parameter *pattern1,* a slot configuration period *P* microsecond (ms) (*dl-UL-TransmissionPeriodicity*), the number of slots *d slots* with only downlink symbols (*nrofDownlinkSlots*)*,* the number of downlink symbols *d_sym* (*nrofDownlinkSymbols*), the number of slots *u slots* with only UL symbols (*nrofUplinkSlots*), and the number of uplink symbols *u_sym* (*nrofUplinkSymbols*)*.*

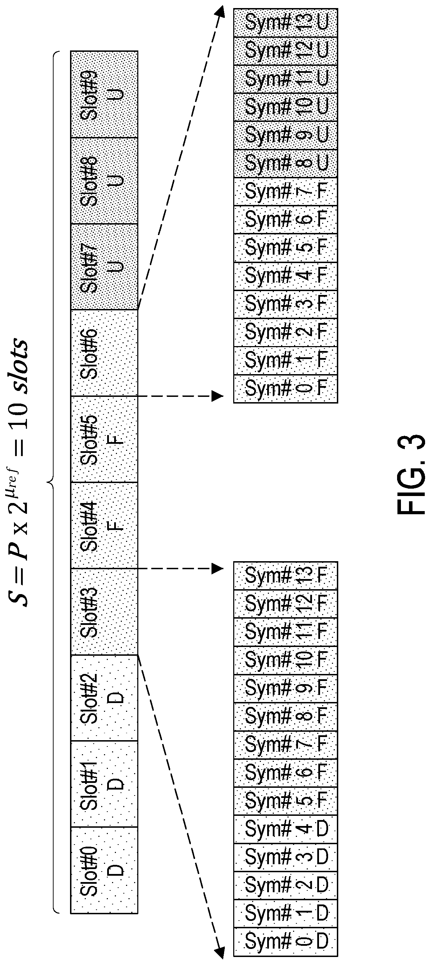

For example, FIG. 3 is a schematic diagram that illustrates a pattern *pattern1 of tdd-UL-DL-ConfigurationCommon.* Referring to FIG. 3, the higher layer parameter *pattern1* is set with P=5ms, *d_slot*=3, *u_slot*=3, *d_sym*=5, and *u_sym*=6. *S* is the number of slots determined according to *P* and *µ_ref. µ_ref* may be a subcarrier spacing. For example, if *µ_ref*=1, the subcarrier spacing is 30KHz. In response to receiving the configuration "*d_slot*=3, *u_slot*=3, *d_sym*=5, and *u_sym*=6"*,* a UE knows there are three slots (i.e., *d_slot*=3) which are slot#0, slot#1, and slot#2 allocated for DL resources (i.e., "D" stands for DL resources) in the 10 slots (i.e., *S*), there are five symbols (i.e., *d_sym*=5) which are sym#0 to sym#4 allocated for DL resources in the subsequenct timeslot slot #3, there are three slots (i.e., *u_slot*=3) which are slot#7, slot#8, and slot#9 allocated for UL resources (i.e., "U" stands for UL resources) in the 10 slots (i.e., *S*), and there are six symbols (i.e., *u_sym* =6) which are sym#8 to sym#13 allocated for UL resources in the antecedent timeslot slot#6. Those symbols or timeslots which are not indicated by the configuration with a specific transmission direction are allocated for flexible resources (i.e., "F" stands for flexible resources).

If the higher layer parameter *tdd-UL-DL-ConfigurationCommon* provides both higher layer parameters *pattern1* and *pattern2,* the UE may set the slot format per slot over the first number of slots as indicated by *pattern1* and the UE may set the slot format per slot over the second number of slots as indicated by *pattern2.*

The higher layer parameter *pattern2* may be provided with a slot configuration period *P*_2 ms (*dl-UL-TransmissionPeriodicity*)*,* the number of slots *d_slots_2* with only downlink symbols (*nrofDownlinkSlots*)*,* the number of downlink symbols *d_sym_2* (*nrofDownlinkSymbols*), the number of slots *u_slots*_*2* with only UL symbols (*nrofUplinkSlots*), and the number of uplink symbols *u_sym_2* (*nrofUplinkSymbols*).

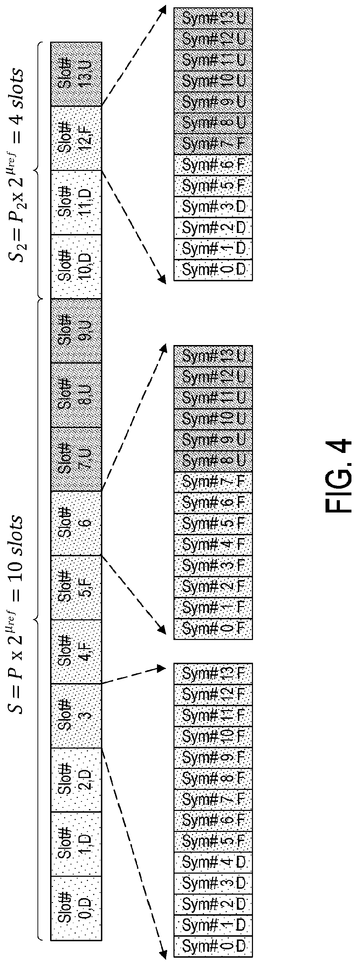

For example, FIG. 4 is a schematic diagram that illustrates two patterns *pattern1* and *pattern2* of *tdd-UL-DL-ConfigurationCommon.* Referring FIG. 4, the higher layer parameter *pattern1* is set with *P*=5ms, *d_slot*=3*, u_slot*=3*, d_sym*=5, and *u_sym*=6*,* and the higher layer parameter *pattern2* is set with *P*_2=2ms, *d_slot_2*=2*, u_slot_2*=1*, d_sym*_2=4, and *u_sym*_*2*=7*.* The slot configuration period of *P+P_*2 ms includes S (i.e., 10 slots in which *µ_ref*=1) and *S₂* (i.e., 4 slots in which *µ_ref* = 1). In response to receiving *pattern1 "d_slot*=3*, u_slot*=3, *d_sym*=5, and *u_sym*=6", a UE knows there are three slots (i.e., *d_slot*=3) which are slot#0, slot#1, and slot#2 allocated for DL resources (i.e., "D" stands for DL resources) in the 10 slots (i.e., *S*), there are five symbols (i.e., *d_sym*=5) which are sym#0 to sym#4 allocated for DL resources in the subsequenct timeslot slot #3, there are three slots (i.e., *u_slot*=3) which are slot#7, slot#8, and slot#9 allocated for UL resources (i.e., "U" stands for UL resources) in the 10 slots (i.e., *S*), and there are six symbols (i.e., *u_sym* =6) which are sym#8 to sym#13 allocated for UL resources in the antecedent timeslot slot#6. Those symbols or timeslots which are not indicated by the configuration with a specific transmission direction are allocated for flexible resources (i.e., "F" stands for flexible resources). Furthermore, in response to receiving *pattern2 "d_slot_2*=2, *u_slot_2*=1*, d_sym*_*2*=4, and *u_sym*_*2*=7", a UE knows there are 2 slots (i.e., *d_slot*_*2*=2) which are slot#10 and slot#11 allocated for DL resources in the subsequent 4 slots (i.e., *S₂*), there are four symbols (i.e., *d_sym*_2=4) which are sym#0 to sym#3 allocated for DL resources in the subsequent time slot slot #12, there is one slot which is slot#13 allocated for UL resources in the 4 slots (i.e., *S₂*), and there are seven symbols (i.e., *u_sym_2*=7) which are sym#7 to sym#13 allocated for UL resources in the antecedent timeslot slot#12. Those symbols or timeslots which are not indicated by the configuration with a specific transmission direction are allocated for flexible resources.

The *tdd-UL-DL-ConfigurationDedicated* is a UE-specific configuration. If the UE additionally provided *tdd-UL-DL-ConfigurationDedicated,* the parameter *tdd-UL-DL-ConfigurationDedicated* may override only flexible symbols per slot over the number of slots as provided by *tdd-UL-DL-ConfigurationCommon.* The higher layer parameter *tdd-UL-DL-ConfigurationDedicated* may provide: a slot index *slotIndex* (*TDD-UL-DL-SlotIndex*), the number of downlink symbols *nrofDownlinkSymbols,* and the number of uplink symbols *nrofUplinkSymbols.*

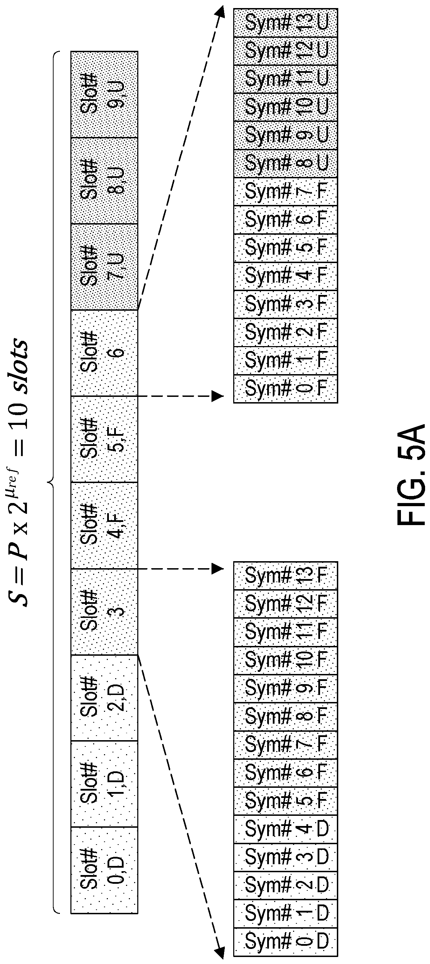

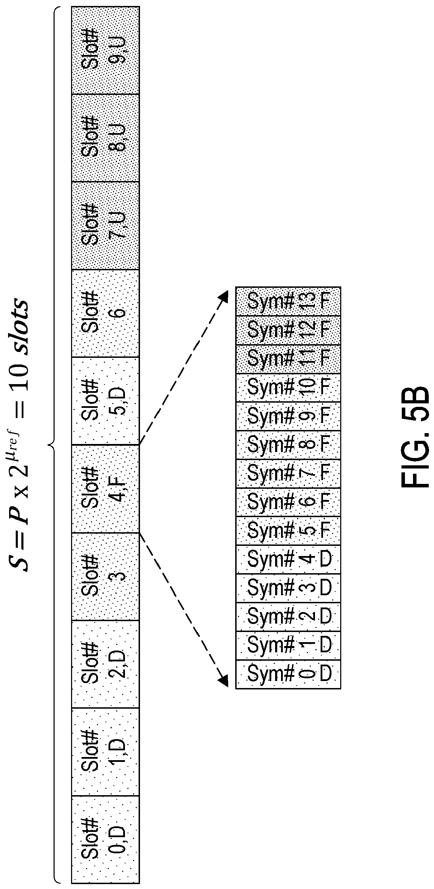

For example, FIG. 5A and FIG. 5B are schematic diagrams that show pattern change of tdd-UL-DL-ConfigurationDedicated. Referring to FIG. 5A, a UE receives *tdd-UL-DL-ConfigurationCommon* with parameters as described in FIG. 3. Referring to FIG. 5B, then, the UE receives *tdd-UL-DL-ConfigurationDedicated* with parameters *nrofDownlinkSymbols* =5 and *nrofUplinkSymbols*=3 for *slotIndex*=4 and parameter *allDownlink* for *slotIndex*=5. Therefore, the parameters for timeslot slot#4 (i.e., *slotIndex*=4) which is a flexible resource would be overridden. In timeslot slot#4, there are five symbols (i.e., *nrofDownlinkSymbols* =5) which are sym#0 to sym#4 allocated for DL resources, there are three symbols (i.e., *nrofUplinkSymbols* =3) which are sym#11 to sym#13 allocated for UL resources, and the rest is sym#5 to sym#10 allocated for flexible resources. The parameters for timeslot slot#5 (i.e., *slotIndex*=5) which is another flexible resource would be overridden, and all symbols are DL symbols (i.e., *allDownlink*).

DCI format 2_0 is a dynamic TDD indication. If a UE is configured by higher layers with a parameter *SlotFormatIndicator,* the UE may be provided an SFI-RNTI by SFI-RNTI and with a payload size of DCI format 2_0 by *dci-PayloadSize.* A SFI-index field value in a DCI format 2_0 may indicate to a UE a slot format for each slot in the number of slots starting from a slot where the UE detects the DCI format 2_0. For a set of symbols of a slot that are indicated as downlink/uplink by *tdd-UL-DL-ConfigurationCommon,* or *tdd-UL-DL-ConfigurationDedicated,* the UE may not expect to detect a DCI format 2_0 with an SFI-index field value indicating the set of symbols of the slot as uplink/downlink, respectively, or as flexible. Therefore, the DCI format 2_0 would not override UL/DL symbols as provided by parameter *tdd-UL-DL-ConfigurationCommon* and/or *tdd-UL-DL-ConfigurationDedicated,* but may override flexible symbols.

Table (1) is an example of a slot format table:

**Table (1)**

| format | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | F | F | F | F | F | U | U | U | U |

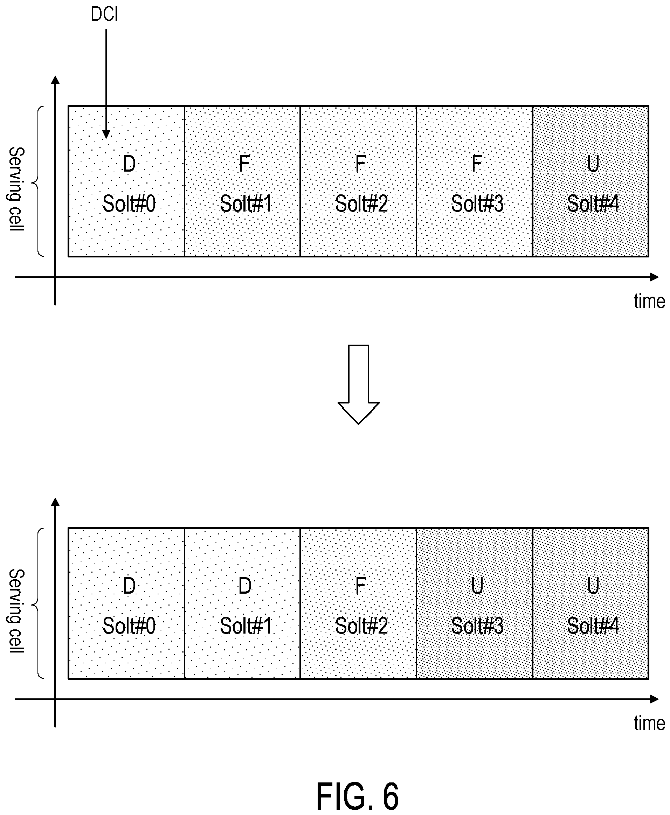

For example, FIG. 6 is a schematic diagram that illustrates transmission directions configurated by downlink control information (DCI). Referring to FIG. 6, a UE may detect a DCI format 2_0 at timeslot slot#0, and a SFI-index field of the DCI format 2_0 may indicate "11" (i.e., Slot Format Combination: 0, 0, 2, 1). Timeslot slot#1 would be set as slot format "0" which is all DL symbols. Timeslot slot#2 would be set as slot format "2" which is all flexible symbols. Timeslot slot#1 would be set as slot format "1" which is all UL symbols.

Regarding a higher layer scheduling, a UE may be configured with a flexible resource by higher layer configuration, and the UE may detect a DCI format 2_0 indicating a resource as flexible, then there are some reception limitations and/or transmission limitations.

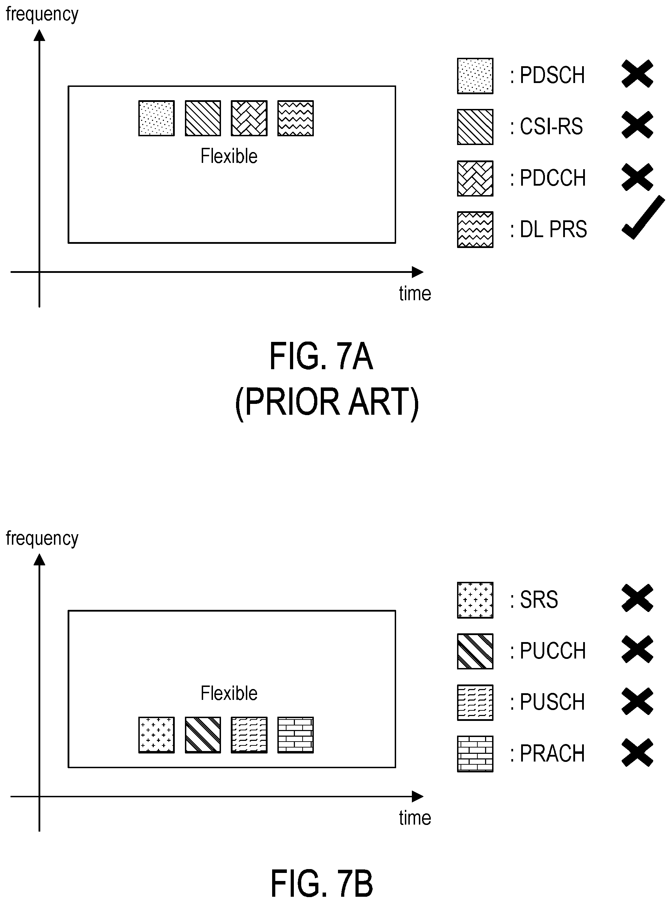

FIG. 7A is a schematic diagram that illustrates reception limitations of a flexible resource at DL part with detecting DCI format 2_0. Referring to FIG. 7A, the reception limitations for DL may be:
The UE may not receive a physical downlink control channel (PDCCH) in the flexible resource.
If the UE is configured by higher layers to receive a physical downlink shared channel (PDSCH) or channel state information Reference signal (CSI-RS) in the flexible resource, the UE may not receive the PDSCH or CSI-RS in the flexible resource.
If the UE is configured by higher layers to receive DL positioning signal (PRS) in the flexible resource, the UE may receive the DL PRS in the flexible resource.

FIG. 7B is a schematic diagram that illustrates transmission limitations of a flexible resource at UL part with detecting DCI format 2_0. Referring to FIG. 7B, the transmission limitations for UL may be:
If the UE is configured by higher layers to transmit a sounding reference signal (SRS) in the flexible resource, the UE may not transmit the SRS in the flexible resource.
If the UE is configured by higher layers to transmit a physical uplink control channel (PUCCH) in the flexible resource, the UE may not transmit the PUCCH in the flexible resource.
If the UE is configured by higher layers to transmit a physical uplink shared channel (PUSCH) in the flexible resource, the UE may not transmit the PUSCH in the flexible resource.
If the UE is configured by higher layers to transmit a physical random access channel (PRACH) in the flexible resource, the UE may not transmit the PRACH in the flexible resource.

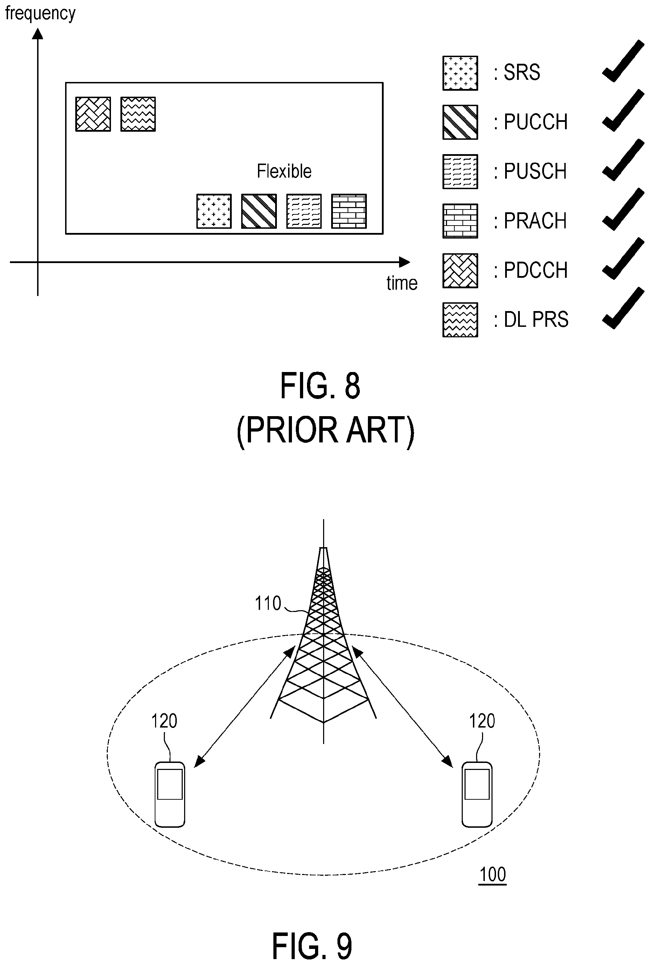

FIG. 8 is a schematic diagram that illustrates transmission and reception without detecting DCI format 2_0. Referring to FIG. 8, regarding a higher layer scheduling, a UE may be configured with a flexible resource by higher layer configuration, and the UE may not detect a DCI format 2_0 providing slot format for the flexible resource, then
The UE may receive PDCCH in the flexible resource.
If the UE is configured by higher layers to receive DL PRS in the flexible resource, the UE may receive the DL PRS in the flexible resource.
If the UE is configured by higher layers to transmit SRS in the flexible resource, the UE may transmit the SRS in the flexible resource.
If the UE is configured by higher layers to transmit PUCCH in the flexible resource, the UE may transmit the PUCCH in the flexible resource.
If the UE is configured by higher layers to transmit PUSCH in the flexible resource, the UE may transmit the PUSCH in the flexible resource.
If the UE is configured by higher layers to transmit PRACH in the flexible resource, the UE may transmit the PRACH in the flexible resource.

FIG. 9 is a schematic diagram that illustrates a communication system 100 according to an exemplary embodiment of the present disclosure. Referring to FIG. 9, a communication system 100 (e.g., a Long Term Evolution (LTE) system, an LTE-Advanced (LTE-A) system, an LTE-Advanced Pro system, or a 5G NR Radio Access Network (RAN)) typically includes one or more network devices 110 and one or more UEs 120. The UE 120 communicates with the network (e.g., a Core Network (CN), an Evolved Packet Core (EPC) network, an Evolved Universal Terrestrial Radio Access network (E-UTRAN), a 5G Core (5GC), or an internet), through a RAN established by one or more network devices 110.

It should be noted that, in the present disclosure, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A network device (or called base station, an NW device, or NW) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A network device may include, but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The network device may connect to serve the one or more UEs through a radio interface to the network.

The network device may be operable to provide radio coverage to a specific geographical area using a plurality of cells included in the RAN. The network device may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The network device may communicate with one or more UEs in the radio communication system through the plurality of cells.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

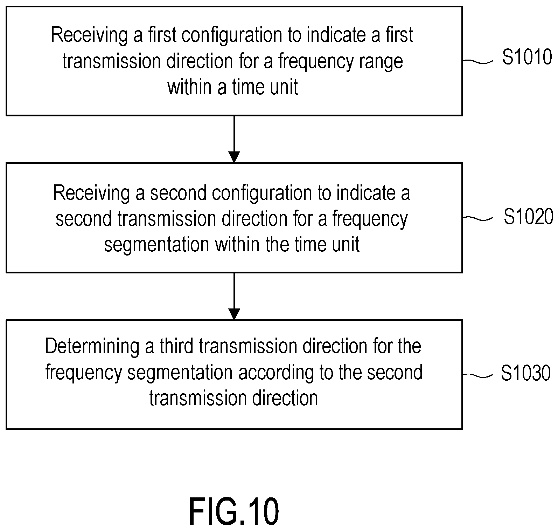

FIG. 10 is a flow chart of a transmission direction setting method according to an exemplary embodiment of the present disclosure. Referring to FIG. 10, the method is adapted for a UE. The UE receives a first configuration to indicate a first transmission direction for a frequency range within a time unit (S1010). In one embodiment, the first configuration may be a higher layer configuration such as *tdd-UL-DL-ConfigurationCommon, tdd-UL-DL-ConfigurationDedicated,* or other configurations used for setting transmission direction. In one embodiment, the first transmission direction may be, for example, DL, UL, flexible, or blank. In one embodiment, the frequency range may be, for example, a serving cell, a sub-band such as BWP of the serving cell, or a range of resource blocks (RBs) provided by a network device. In one embodiment, the time unit is one or more timeslots or one or more symbols.

The UE receives a second configuration to indicate a second transmission direction for a frequency segmentation within the time unit (Step S1020). In one embodiment, the second configuration may be a higher layer configuration such as *tdd-UL-DL-ConfigurationDedicated,* or other configurations used for setting transmission direction. In one embodiment, the second configuration may be a downlink control information (DCI). For example, DCI format 2_0. In one embodiment, the second transmission direction may be, for example, DL, UL, flexible, or blank. The frequency segmentation consists of one resource block (RB) or a set of consecutive RBs, and the frequency segmentation is a part of the frequency range. The frequency segmentation may be less than the frequency range.

The UE determines a third transmission direction for the frequency segmentation according to the second transmission direction (Step S1030).

In one embodiment, the UE may determine the third transmission direction for the frequency segmentation as DL when the first transmission direction is flexible and the second transmission direction is DL, or when the first transmission direction is DL and the second transmission direction is DL, or when the first transmission direction is UL and the second transmission direction is DL. That is the third transmission direction is the second transmission direction (i.e., DL) no matter whether the first transmission direction is DL, UL or flexible.

In one embodiment, the UE may determine the third transmission direction for the frequency segmentation as UL when the first transmission direction is flexible and the second transmission direction is UL, or when the first transmission direction is UL and the second transmission direction is UL, or when the first transmission direction is DL and the second transmission direction is UL. That is the third transmission direction is the second transmission direction (i.e., UL) no matter whether the first transmission direction is DL, UL or flexible.

In one embodiment, the UE may determine the third transmission direction for the frequency segmentation as flexible, when the first transmission direction is flexible and the second transmission direction is flexible, or when the first transmission direction is UL and the second transmission direction is flexible, or when the first transmission direction is the DL and the second transmission direction is flexible. That is the third transmission direction is the second transmission direction (i.e., flexible) no matter whether the first transmission direction is DL, UL or flexible.

In one embodiment, the UE may determine the third transmission direction for the frequency segmentation as blank when the first transmission direction is flexible and the second transmission direction is blank, or when the first transmission direction is UL and the second transmission direction is blank, or when the first transmission direction is DL and the second transmission direction is blank. That is the third transmission direction is the second transmission direction (i.e., blank) no matter whether the first transmission direction is DL, UL or flexible.

In one embodiment, the second transmission direction may override the first transmission direction. For example, for a set of symbols of a slot that are indicated as downlink/uplink by *tdd-UL-DL-ConfigurationCommon,* or *tdd-UL-DL-ConfigurationDedicated,* the set of symbols of the slot may be indicated as uplink/downlink, respectively, or as flexible by a DCI format 2_0 with an SFI-index field. That is the DCI format 2_0 may override UL/DL symbols as provided by parameter *tdd-UL-DL-ConfigurationCommon* and/or *tdd-UL-DL-ConfigurationDedicated.*

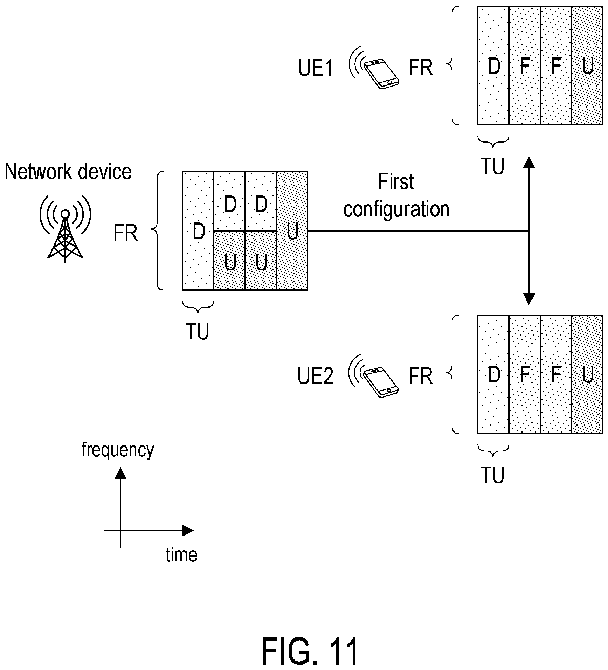

For example, FIG. 11 is a schematic diagram that illustrates a transmission direction setting of a first configuration according to an exemplary embodiment of the present disclosure. Referring to FIG. 11, if *tdd-UL-DL-ConfigurationCommon* (i.e., the first configuration) is received, the transmission directions of timeslots TU of UE1 would be set as DL, flexible, flexible, and UL, respectively, for the whole frequency range FR. The transmission directions of timeslots TU of UE2 would also be set as DL, flexible, flexible, and UL, respectively.

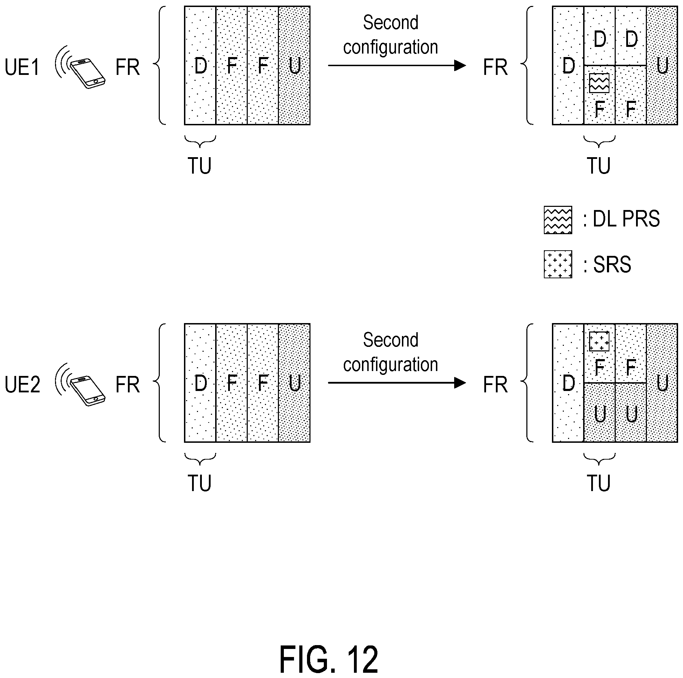

FIG. 12 is a schematic diagram that illustrates a transmission direction setting of a second configuration according to an exemplary embodiment of the present disclosure. Referring to FIG. 12, if an SFI indication carried by DCI format 2_0 (i.e., the second configuration) is received, the frequency range FR used for UE1 and UE2 may be split within one timeslot TU.

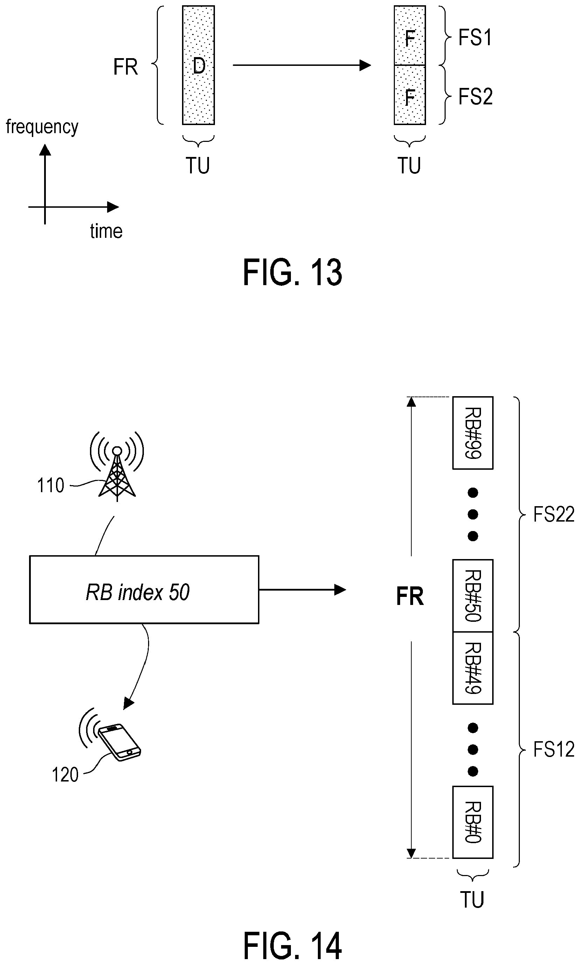

FIG. 13 is a schematic diagram that illustrates frequency segmentations according to an exemplary embodiment of the present disclosure. Referring to FIG. 13, the frequency range FR may be split into two frequency segmentations FS1 and FS2 within a timeslot TU. That is the frequency range FR consists of frequency segmentations FS1 and FS2.

In one embodiment, the second configuration further indicates a fourth transmission direction for another frequency segmentation within the time slot. An overlap between the frequency segmentation and the another frequency segmentation is absent in the frequency domain. That is two frequency segmentations are not overlapped in the frequency domain. A UE may determine a fifth transmission direction for the another frequency segmentation according to the fourth transmission direction. For example, the fifth transmission direction is the fourth transmission direction no matter whether the first transmission direction is DL, UL or flexible. For another example, the fifth transmission direction is the first transmission direction in which the first transmission direction is DL or UL.

Taking FIG. 11 and FIG. 12 as an example, referring to FIG. 11, the network device configures that the frequency range FR is split into two frequency segmentations. In the first configuration, the first transmission direction is configured as flexible. Then, referring to FIG. 12, the second transmission direction of the second configuration may override the first transmission direction of the first configuration. That is, the first transmission direction is replaced by the second transmission direction and the fourth transmission direction. Regarding UE1, the third transmission directions are DL (i.e., the second transmission direction) and flexible (i.e., the fourth transmission direction) within a timeslot TU. Regarding UE2, the fifth transmission directions are flexible (i.e., the second transmission direction) and UL (i.e., the fourth transmission direction) within a timeslot TU.

Furthermore, the network device may specify a resource in which a UE may not perform DL reception and/or UL transmission. Taking FIG. 12 as an example, in order to receive reference signals such as DL PRS or transmit reference signals such as SRS, the UE may not perform DL reception and/or UL transmission.

In one embodiment, one frequency range may consist of more than two frequency segmentations. Then, more than two transmission directions may be configured for a time unit.

In one embodiment, the UE may determine the third transmission direction for the frequency segmentation as UL, when the first transmission direction is DL for a frequency range and the second transmission direction is UL for a frequency seqmentation of the frequency range. That is the first transmission direction is replaced by the second transmission direction.

In one embodiment, the UE may determine the third transmission direction for the frequency segmentation as DL, when the first transmission direction is UL for a frequency range and the second transmission direction is DL for a frequency seqmentation of the frequency range. That is the first transmission direction is replaced by the second transmission direction.

In one embodiment, the frequency segmentation occupies a range from a first RB to a second RB, the first RB and the second RB are with reference to common resource block (CRB) grid, and the second configuration comprises at least one of an RB index of the first RB and an RB index of the second RB. A UE may be provided, for example, by higher layer, by DCI indication, one or more RB indexes. These RB indexes may be applied to a frequency range, for example, a serving cell or a BWP of the serving cell.

For example, FIG. 14 is a schematic diagram that illustrates frequency segmentations indicated by resource block (RB) indexes according to an exemplary embodiment of the present disclosure. Referring to FIG. 14, a UE may be configured with a frequency range FR such as a serving cell from resource block RB#0 (i.e., the first RB) to resource block RB#99 (i.e., the second RB). The second configuration indicates RB index 50 corresponding to resource block RB#50. Therefore, the first frequency segmentation FS 12 occupies from resource block RB#0 to resource block RB#49, and the second frequency segmentation FS22 occupies from resource block RB#50 to resource block RB#99.

The following may be applicable for each frequency range such as serving cell. Regarding cell-specific configuration, if a UE is provided *tdd-UL-DL-ConfigurationCommon,* the UE may set the slot format per slot over a number of slots as indicated by *tdd-UL-DL-ConfigurationCommon.* Regarding UE-specific configuration, a UE may be configured a parameter of *tdd-UL-DL-ConfigurationDedicated_duplex,* wherein the parameter may comprise at least one of following:
RB index field: may provide at least one RB index
Transmission state field: may provide at least one transmission direction/state
The transmission direction/state may be DL, UL, Flexible, or Blank (resource).

In one embodiment, the RB index field indicated by the second configuration is a starting RB of one frequency segmentation.

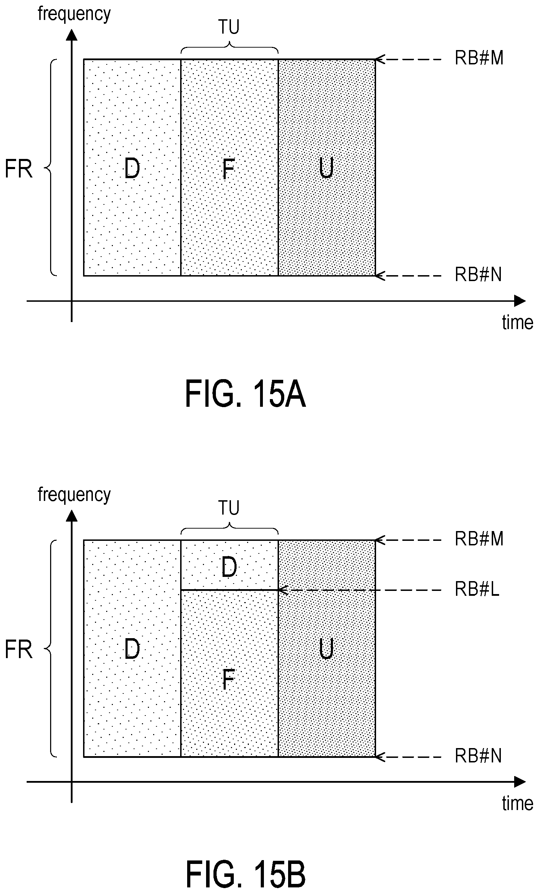

For example, FIG. 15A is a schematic diagram that illustrates a transmission direction setting of *tdd-UL-DL-ConfigurationCommon* with RB indexes according to an exemplary embodiment of the present disclosure. Referring to FIG. 15A, *tdd-UL-DL-ConfigurationCommon* configures transmission directions of three timeslot TU for the whole frequency range FR from resource block RB#N (i.e., the highest RB index of the frequency range FR) to resource block RB#M (i.e., the lowest RB index of the frequency range FR). M and N are integers. For example, N is 0, and M is 99.

FIG. 15B is a schematic diagram that illustrates a transmission direction setting of *tdd-UL-DL-ConfigurationDedicated_duplex* with RB indexes according to an exemplary embodiment of the present disclosure. Referring to FIG. 15B, UL-DL-ConfigurationDedicated_duplex configures transmission directions of one timeslot TU as flexible and DL with RB index field set as L in which one frequency segmentation occupies from resource block RB#N to resource block RB#L-1 and another frequency segmentation occupies from resource block RB#L to resource block RB#M. L is an integer not larger than M and not smaller than N. For example, if N is 0 and M is 99, L could be 70. The one frequency segmentation is configured as flexible and the another frequency segmentation is configured as DL.

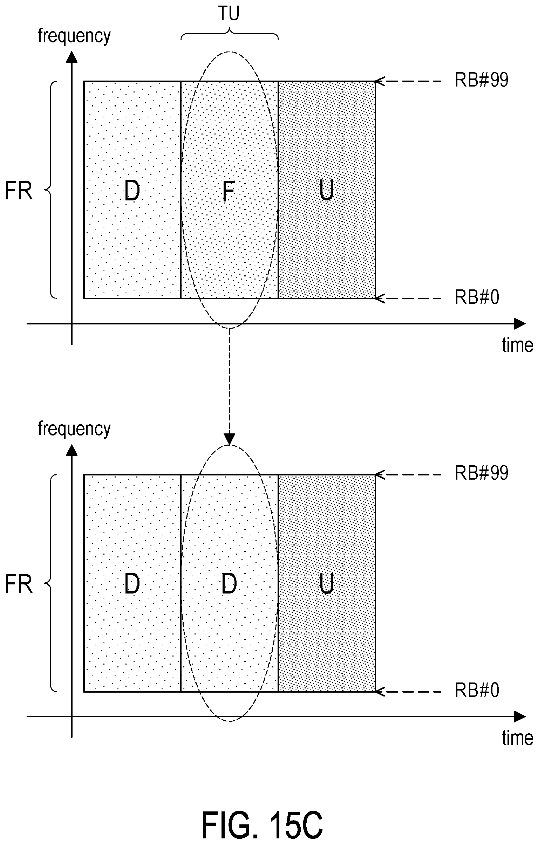

FIG. 15C is a schematic diagram that illustrates a transmission direction setting of *tdd-UL-DL-ConfigurationDedicated_duplex* with the lowest RB index according to an exemplary embodiment of the present disclosure. Referring to FIG. 15C, UL-DL-ConfigurationDedicated_duplex configures transmission directions of one timeslot TU as flexible and DL with RB index field set as N (e.g., 0) in which no frequency segmentation is generated from resource block RB#N to resource block RB#M (M is, for example, 99) and the frequency range FR is configured as DL.

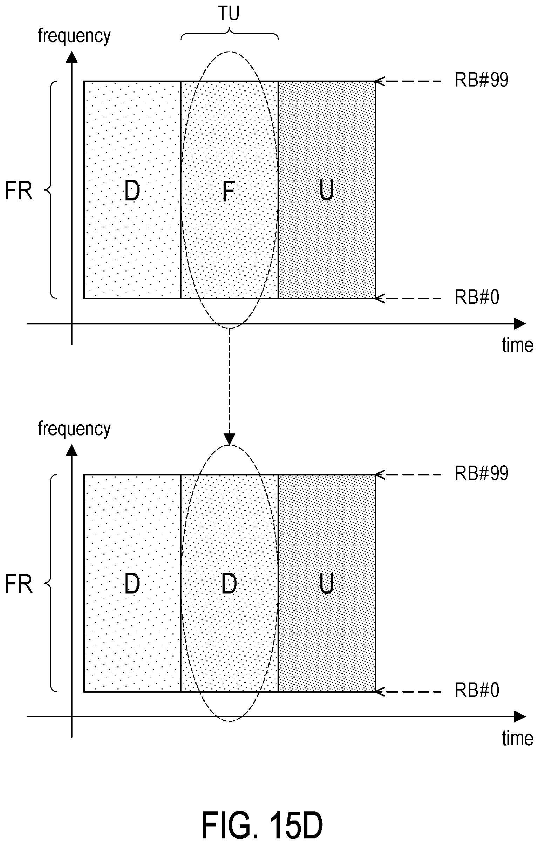

FIG. 15D is a schematic diagram that illustrates a transmission direction setting of *tdd-UL-DL-ConfigurationDedicated_duplex* with the highest RB index according to an exemplary embodiment of the present disclosure. Referring to FIG. 15D, UL-DL-ConfigurationDedicated_duplex configures transmission directions of one timeslot TU as flexible and DL with RB index field set as M (e.g., 99) in which no frequency segmentation is generated from resource block RB#N (M is, for example, 0) to resource block RB#M and frequency range FR is configured as flexible.

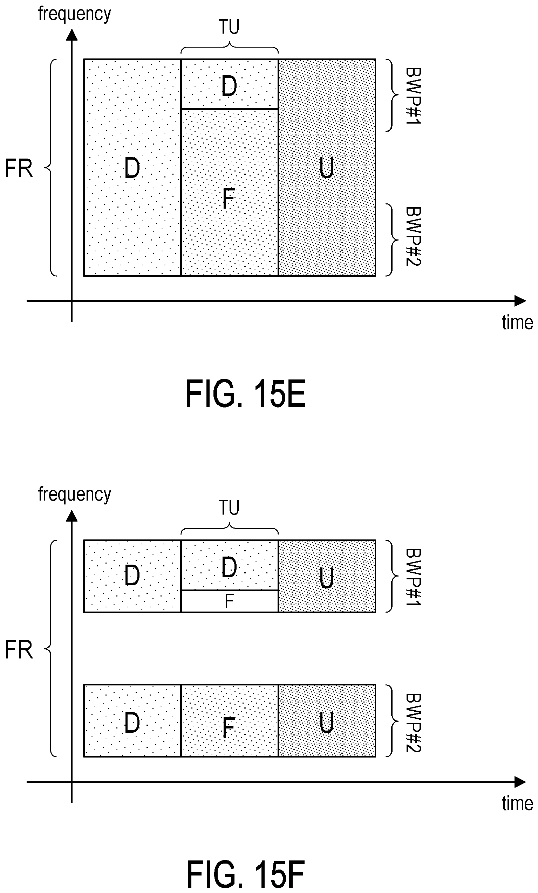

FIG. 15E is a schematic diagram that illustrates a transmission direction setting *of tdd-UL-DL-ConfigurationCommon* for bandwidth parts (BWPs) according to an exemplary embodiment of the present disclosure. Referring to FIG. 15E, the frequency range FR includes bandwidth parts BWP#1 and BWP#2. FIG. 15F is a schematic diagram that illustrates a transmission direction setting of *tdd-UL-DL-ConfigurationDedicated* for BWP according to an exemplary embodiment of the present disclosure. Referring to FIG. 15F, a network device and a UE may operate a full duplex in bandwidth part BWP#1 in which the bandwidth part BWP#1 is configured with DL and flexible.

It should be noted a (e.g., DL and/or UL) BWP in the disclosure may be a contiguous set of PRB(s) on a given carrier. UE can be configured with maximum 4 BWP for Downlink and Uplink but at a given point of time only one BWP is active for downlink and one for uplink. Each BWP defined for a numerology may have different Subcarrier spacing, Symbol duration and/or Cyclic prefix (CP) length.

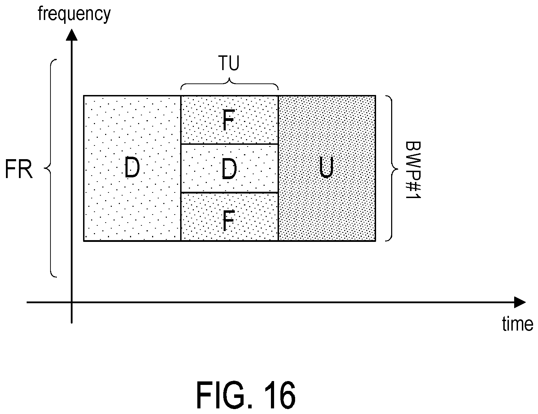

In one embodiment, multiple flexible resources may be configured in one bandwidth part. For example, FIG. 16 is a schematic diagram that illustrates a resource allocation with multiple flexible resources for BWP according to an exemplary embodiment of the present disclosure. Referring to FIG. 16, a UE may operate in a bandwidth part BWP#1, and the UE may have a first flexible resource and a second flexible resource in the bandwidth part BWP#1. Within a time interval such as timeslot TU, the UE may not expect that the first flexible resource and the second flexible resource are discontinuous in the frequency domain.

In one embodiment, the following may be applicable for a frequency range such as a serving cell. If a UE is provided *tdd-UL-DL-ConfigurationCommon,* the UE may set the slot format per slot over a number of slots as indicated by *tdd-UL-DL-ConfigurationCommon.* If the UE is additionally provided *tdd-UL-DL-ConfigurationDedicated,* the parameter *tdd-UL-DL-ConfigurationDedicated* may override only flexible symbols per slot over the number of slots as provided by *tdd-UL-DL-ConfigurationCommon.*

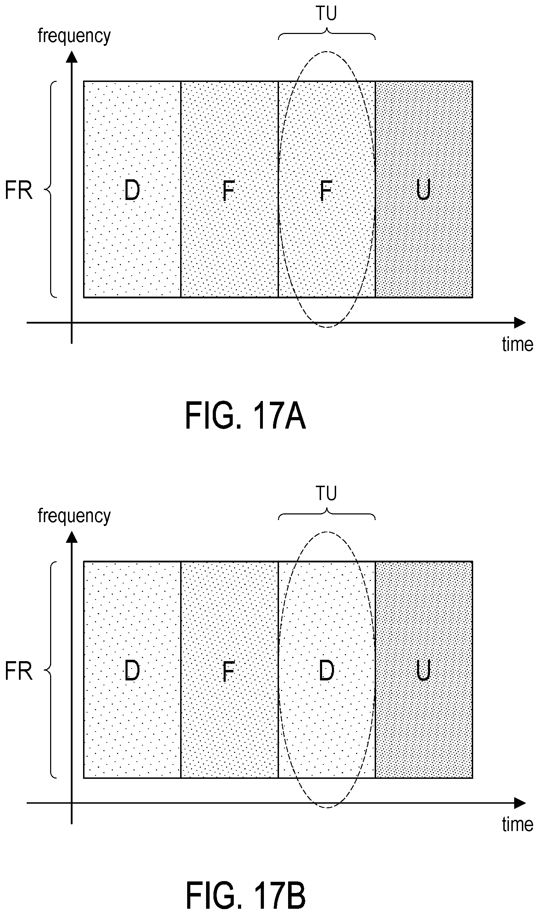

For example, FIG. 17A is a schematic diagram that illustrates a slot format indication by *tdd-UL-DL-ConfigurationCommon* according to an exemplary embodiment of the present disclosure. Referring to FIG. 17A, if *tdd-UL-DL-ConfigurationCommon* (i.e., the first configuration) is received, the transmission directions of timeslots TU would be set as DL, flexible, and UL, respectively, for the whole frequency range FR. FIG. 17B is a schematic diagram that illustrates a slot format indication by *tdd-UL-DL-ConfigurationDedicated* according to an exemplary embodiment of the present disclosure. Referring to FIG. 17B, then, *tdd-UL-DL-ConfigurationDedicated* (i.e., the second configuration) is received, the transmission direction of a timeslot TU would be set as DL. That is the flexible resource provided by *tdd-UL-DL-ConfigurationCommon* may be overridden as DL resource by dd-UL-DL-ConfigurationDedicated.

In one embodiment, regarding cell-specific indication such as DCI, a UE may be configured with a frequency range such as a serving cell, and the UE may operate in a BWP within the serving cell. The UE may detect a DCI, for example, DCI format 2_0, in the BWP, and the DCI may comprise one or more pieces of the following information which may be applied to the frequency range:
RB index field: may provide one or more RB indexes;
Transmission state field: may provide one or more transmission states/directions;
The transmission state/direction could be DL, UL, Flexible, or Blank.

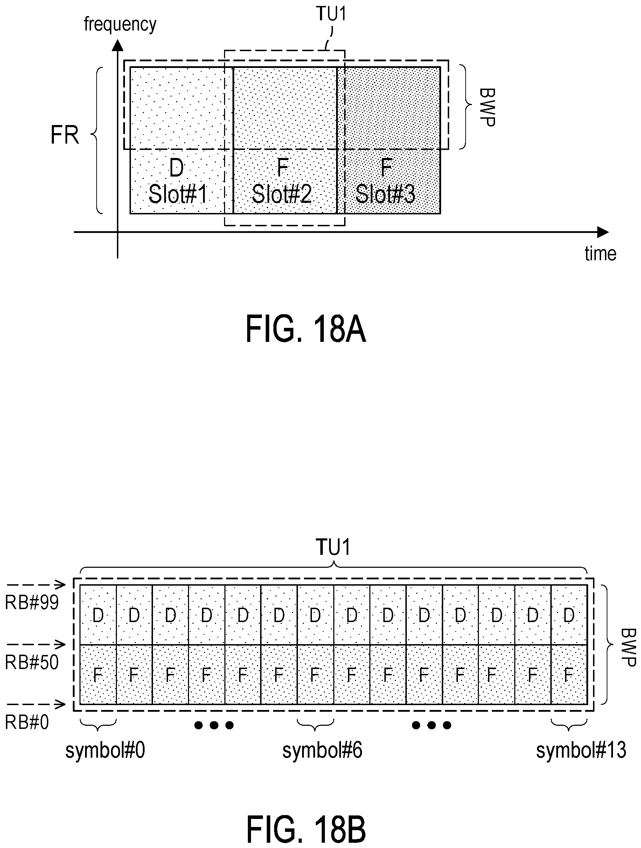

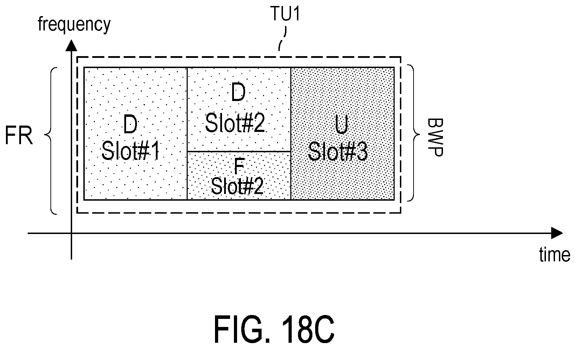

For example, FIG. 18A to FIG. 18C are schematic diagrams that illustrate a slot format indication by DCI format 2_0 according to an exemplary embodiment of the present disclosure. Referring to FIG. 18A, a UE may detect a DCI format 2_0 in a bandwidth part BWP at timeslot slot#1. Referring to FIG. 18A and FIG. 18B, the DCI format 2_0 may include at least one of the following information: RB index field, for example, RB index 50, and transmission state/direction, for example, flexible and DL. The information is used for the whole frequency range FR within a time unit TU1 such as timeslot slot#2 configured as flexible. Therefore, in a time unit TU1 including symbol#0 to symbol#13, two frequency segmentations would be configured as flexible and DL. Referring to FIG. 18C, a network device and the UE may operate full-deplex in the bandwidth part BWP.

In one embodiment, regarding BWP-specific indication such as DCI, a UE may detect a DCI, e.g., DCI format 2_0, in the BWP, and the DCI may comprise one or more pieces of the following information which may be applied to the BWP:
RB index field: may provide one or more RB indexes;
Transmission state field: may provide one or more transmission states/directions;
The transmission state/direction could be DL, UL, Flexible, or Blank.
However, the DCI may not be applied to other BWPs.

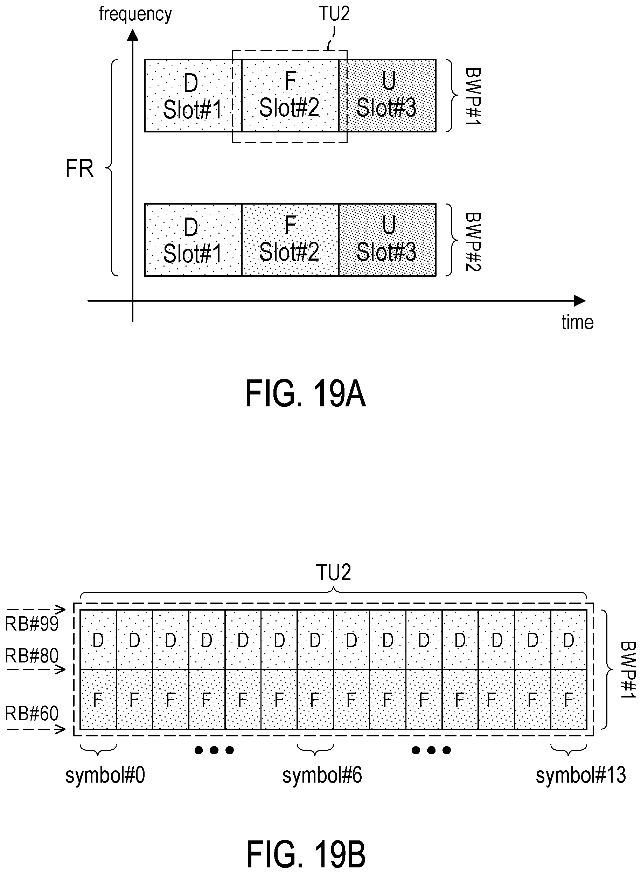

For example, FIG. 19A and FIG. 19B are schematic diagrams that illustrate a slot format indication by DCI format 2_0 for BWP according to an exemplary embodiment of the present disclosure. Referring to FIG. 19A and FIG. 19B, a UE may detect a DCI format 2_0 in a bandwidth part BWP at timeslot slot#1. The DCI format 2_0 may include at least one of the following information: RB index field, for example, RB index 80, and transmission state/direction, for example, flexible and DL. The information is used for the bandwidth part BWP#1 within a time unit TU2 such as timeslot slot#2 configured as flexible. Therefore, in a time unit TU2 including symbol#0 to symbol#13, two frequency segmentations would be configured as flexible and DL.

In one embodiment, a UE may configure a slot format table. The slot format table includes multiple transmission directions for a symbol, and the number of these transmission directions is associated with the number of frequency segmentations. A UE may be configured with an enhanced slot format table, and the UE may detect a DCI, for example, DCI format 2_0. Each row of the enhanced slot format table may indicate a slot format for a time unit such as a slot. Furthermore, the number of columns of the enhanced slot format table may be 14^{∗}*a*, where the value of *a* may be associated with the RB index field of the DCI, for example, the value of *a* may be the same as the number of RB indexes provided by the RB index field + 1.

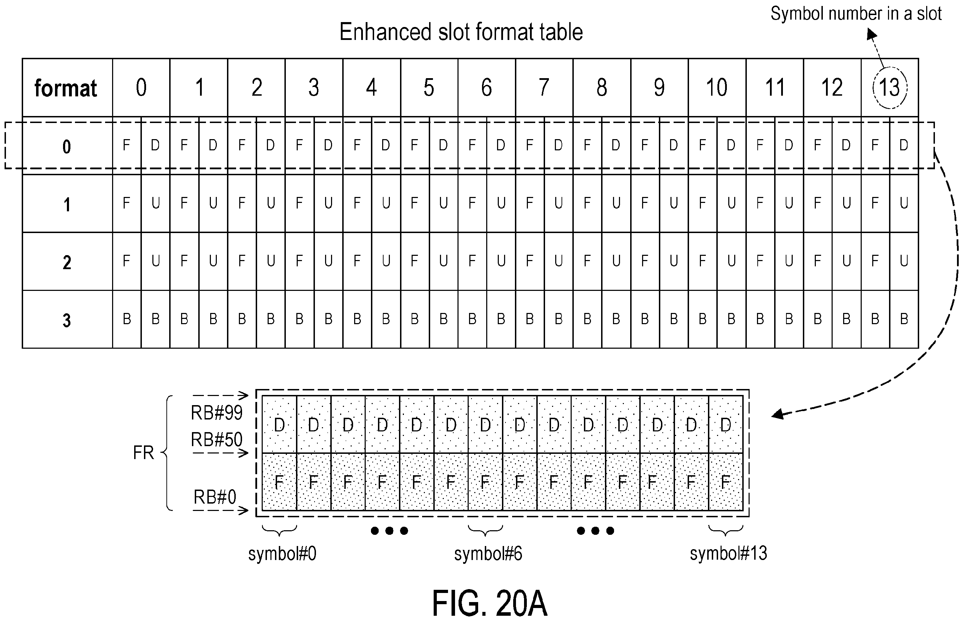

For example, FIG. 20A is a schematic diagram that illustrates an enhanced slot format table according to an exemplary embodiment of the present disclosure. Referring to FIG. 20A, the number of frequency segmentations is 2, and the number of these transmission directions is 2 (i.e., *a*)*.* The number of columns of the enhanced slot format table is 2^{∗}14. That is the number of frequency segmentations equals the number of these transmission directions. Taking format 0 as an example, in each symbol, two transmission directions are configured as flexible and DL. A UE may detect a DCI format 2_0, and the RB index field of the DCI format 2_0 may include "RB index 50". A frequency range FR is split into two frequency segmentations configured as DL from resource block RB#50 to resource block RB#99 and flexible from resource block RB#0 to resource block RB#49.

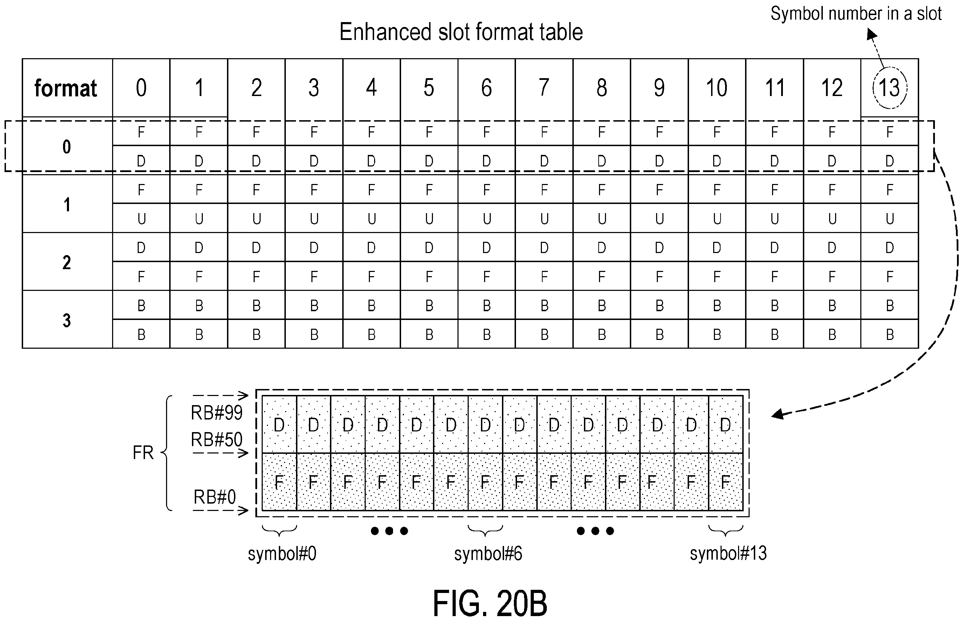

FIG. 20B is a schematic diagram that illustrates another enhanced slot format table according to an exemplary embodiment of the present disclosure. Referring to FIG. 20B, the number of frequency segmentations is 2, and the number of these transmission directions is 2 (i.e., *a*). The number of columns of the enhanced slot format table is 2^{∗}14. That is the number of frequency segmentations equals the number of these transmission directions. Taking format 0 as an example, in each symbol, two transmission directions are configured as flexible and DL. A UE may detect a DCI format 2_0, and the RB index field of the DCI format 2_0 may include "RB index 50". A frequency range FR is split into two frequency segmentations configured as DL from resource block RB#50 to resource block RB#99 and flexible from resource block RB#0 to resource block RB#49.

In one embodiment, a UE may configure a slot format combination table. At least two values within the slot format combination table are used for a slot, and the number of the at least two values is associated with the number of frequency segmentations. A UE may be configured with a slot format combination table, and the UE may detect a DCI, for example, DCI format 2_0, and the number of RB indexes provided by RB index field of the DCI may be X. The number of values in the SlotFormatCombination may be at least equal to X + 1. The number of values in the SlotFormatCombination may be an integer multiple of (X + 1). Per (X+1) values in the SlotFormatCombination may indicate a slot format for a time unit such as a slot.

For example, table (2) is an example of a slot format combination table.

**Table (2)**

| SlotFormatCombinationID | SlotFormatCombination |
|---|---|
| 0 | 0, 2 |
| 1 | 0, 2, 1, 2 |
| 2 | 0, 1, 2, 3 |
| 3 | 0, 0, 2, 2 |

Taking SlotFormatCombinationID "0" as an example, one RB index is provided by a RB index field (X=1), and the number of values in the SlotFormatCombination is at least 2 (X+1). Taking SlotFormatCombinationID "3" as an example, and the number of values in the SlotFormatCombination is 4 (2 times of (X+1)). The slot format combination is a combination of multiple slot formats.

For example, table (3) is an another example of a slot format combination table.

**Table (3)**

| SlotFormatCombinationID | SlotFormatCombination |
|---|---|
| 0 | 2, 0 |
| 1 | 0, 0, 0, 2 |
| 2 | 0, 1, 2, 3 |
| 3 | 0, 0, 2, 2 |

For example, "2, 0" means a combination of the slot format "2" and the slot format "0" as shown in the table (1). Taking 2 values for a slot, the first value, i.e., "2", is applied from RB#0 to RB#49, the second value, i.e., "0", is applied from RB#50 to RB#99.

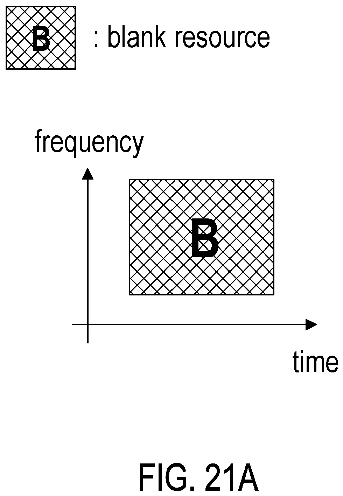

FIG. 21A is a schematic diagram that illustrates a blank source according to an exemplary embodiment of the present disclosure. Referring to FIG. 21A, in one embodiment, a UE may be indicated, for example, by RRC configuration, by DCI indication, by MAC CE indication, by predefined, a resource as blank (resource). The blank resource may be a time domain resource, a frequency domain resource, a spatial domain resource, a time and frequency domain resource, a time and spatial domain resource, or a frequency and spatial domain resource.

In one embodiment, a UE may mute a DL reception and/or a UL transmission within the frequency segmentation when the third transmission direction for the frequency segmentation is determined as blank. That is the UE may not perform DL reception and/or UL transmission in the blank resource.

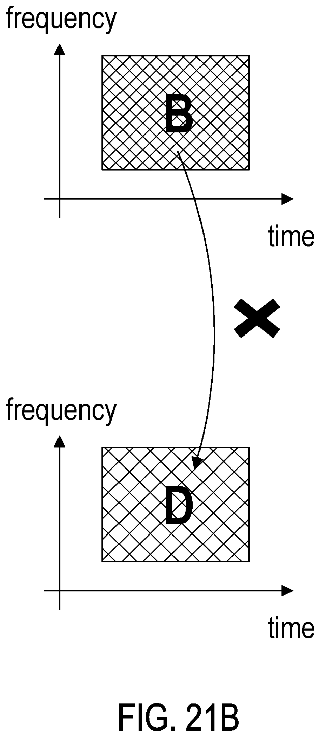

For example, FIG. 21B is a schematic diagram that illustrates a reception limitation on a blank source according to an exemplary embodiment of the present disclosure. Referring to FIG. 21B, upon a resource indicated as blank to a UE, a network device may not override the blank resource to DL resource, and the UE may not expect to detect information, for example, by RRC configuration, by DCI indication, overriding the blank resource to other resources, for example, DL resource, UL resource or Flexible resource.

In one embodiment, a UE may receive a blank pattern. The blank pattern indicates whether one of a set of time units is determined as blank. A UE may be provided, for example, by higher layer or by DCI indication, a blank pattern. The UE may not perform DL reception in a resource, if the resource associated with the blank pattern indicating "enable" or "true", for example, the blank pattern may indicate '1' to the resource. The UE may not perform UL transmission in a resource, if the resource associated with the blank pattern indicating "enable" or "true", for example, the blank pattern may indicate ` 1' to the resource. On the other, UE may perform DL reception or UL transmission in a resource, if the resource associated with the blank pattern indicating "disable" or "false", for example, the blank pattern may indicate '0' to the resource.

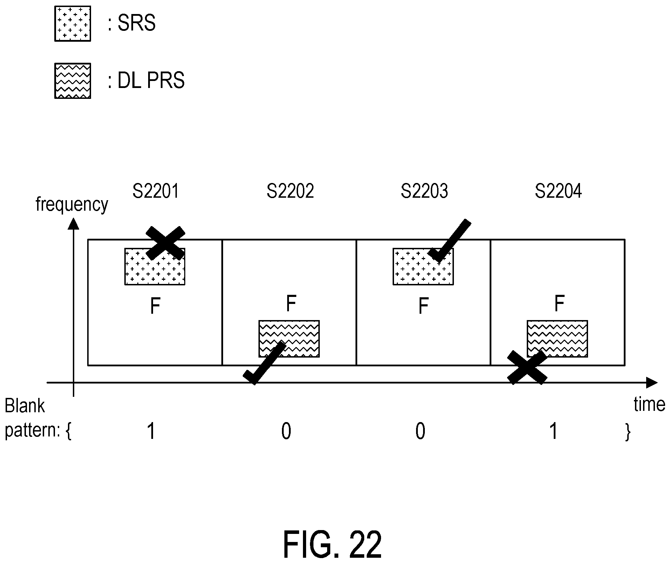

For example, FIG. 22 is a schematic diagram that illustrates a blank pattern according to an exemplary embodiment of the present disclosure. Referring to FIG. 22, the black pattern is {1 0 0 1}. In step S2201, a UE may not perform DL PRS reception in which its blank pattern indicates '1'. In step S2202, the UE may perform SRS transmission in which its blank pattern indicates `0'. In step 2203, the UE may perform DL PRS reception in which its blank pattern indicates '0'. In step S2204, the UE may not perform SRS transmission in which its blank pattern indicates '1'.

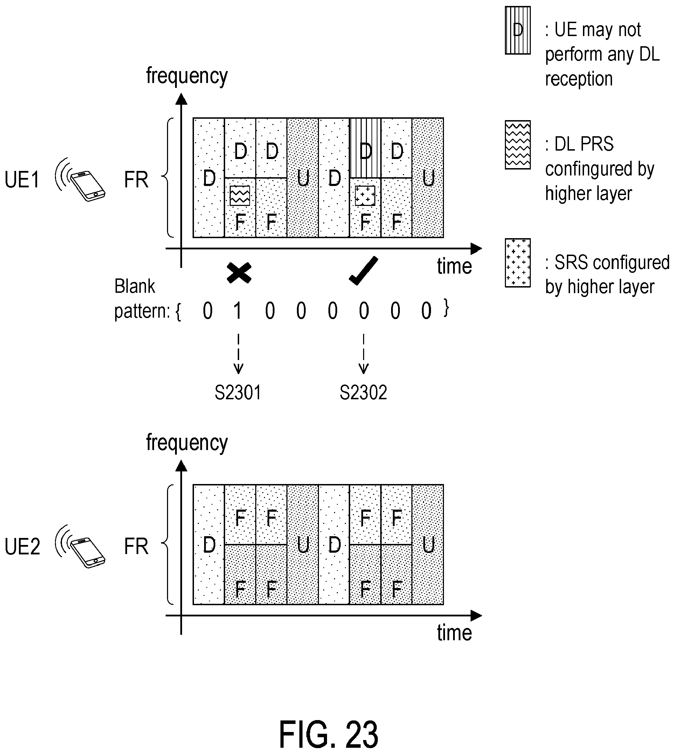

FIG. 23 is a schematic diagram that illustrates another blank pattern according to an exemplary embodiment of the present disclosure. Referring to FIG. 23, the black pattern is {0 1 0 0 0 0 0 0}. In step S2301, UE1 may not perform DL PRS reception in which its blank pattern indicates '1'. In step S2302, UE1 may perform SRS transmission in which its blank pattern indicates `0'.

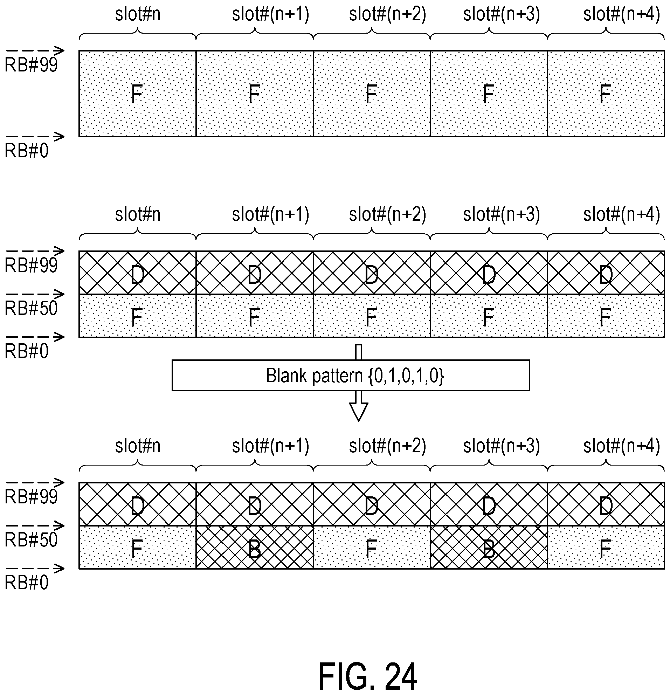

FIG. 24 is a schematic diagram that illustrates a transmission direction setting according to an exemplary embodiment of the present disclosure. Referring to FIG. 24, a network device may provide the following parameters to a UE: P=5 slots, N=RB index 50, transmission directions: flexible and DL, and blank pattern: {0, 1, 0, 1, 0}. Therefore, from timeslot slot#n to timeslot slot#(n+4), two frequency segmentations are configured as DL from resource block RB#50 to resource block RB#99 and flexible from resource block RB#0 to resource block RB#49, respectively. Furthermore, in timeslots slot#(n+1) and slot#(n+4), they are configured as blank by the black pattern from resource block RB#0 to resource block RB#49.

In one embodiment, a UE may disable receiving a DL signal when the transmission direction for the frequency segmentation is determined as flexible and a duplex mode is configured. The DL signal may be, for example, DL PRS or PDCCH. The duplex mode is configured when multiple frequency segmentations are configured as different transmission directions within a time unit.

In one embodiment, a UE may be configured with a flexible resource by higher layer configuration (i.e., the first configuration), and the UE may detect a DCI format 2_0 (i.e., the second configuration) indicating a resource as a flexible resource, and the UE is configured by higher layers to receive DL PRS in the flexible resource. However, the UE may not receive the DL PRS in the flexible resource, if the UE is configured with duplex_mode.

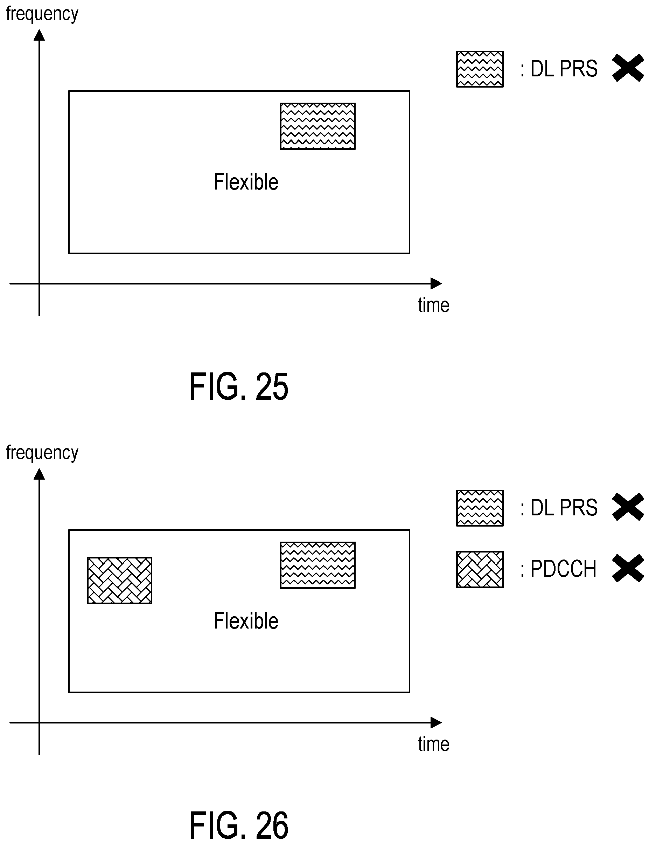

For example, FIG. 25 is a schematic diagram that illustrates a reception limitation on a flexible resource according to an exemplary embodiment of the present disclosure. Referring to FIG. 25, a UE is configured with duplex mode. A resource may be indicated as a flexible resource by a higher layer configuration. Furthermore, the resource may be indicated as a flexible resource by DCI format 2_0. Then, if the flexible resource is configured, the UE may not receive DL PRS.

In one embodiment, a UE may be configured with a flexible resource by higher layer configuration, but the UE may not detect a DCI format 2_0 providing slot format for the flexible resource. The UE may not receive PDCCH in the flexible resource if the UE is configured with duplex _mode. Furthermore, if the UE is configured by higher layers to receive DL PRS in the flexible resource, the UE may not receive the DL PRS in the flexible resource, if the UE is configured with duplex_mode.

For example, FIG. 26 is a schematic diagram that illustrates another reception limitation on a flexible resource according to an exemplary embodiment of the present disclosure. Referring to FIG. 26, a UE is configured with duplex mode. A resource may be indicated as a flexible resource by a higher layer configuration. However, the UE may miss DCI format 2_0. Then, if the flexible resource is configured, the UE may not receive DL PRS and/or PDCCH.

In one embodiment, a UE may disable transmitting an UL signal when the transmission direction for the frequency segmentation is determined as flexible and a duplex mode is configured. The UL signal may be, for example, SRS, PUCCH, PUSCH, or PRACH.

In one embodiment, a UE may be configured with a flexible resource by higher layer configuration, and the UE may not detect a DCI format 2_0 providing slot format for the flexible resource. The UE may not transmit SRS in the flexible resource if the UE is configured with duplex _mode. The UE may not transmit PUCCH in the flexible resource if the UE is configured with duplex_mode. The UE may not transmit PUSCH in the flexible resource if the UE is configured with duplex_mode. The UE may not transmit PRACH in the flexible resource if the UE is configured with duplex_mode. It should be noted that the UE may be provided enableConfiguredUL.

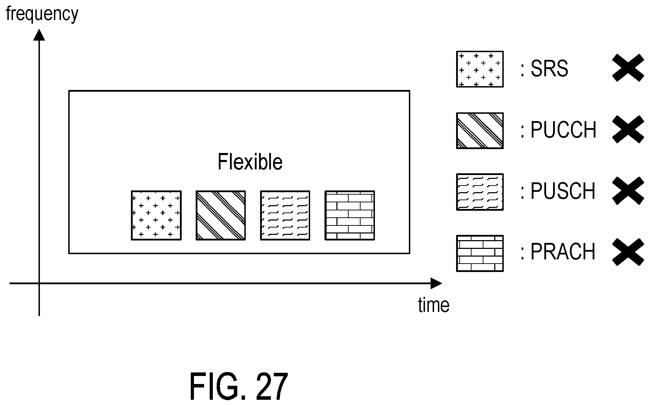

For example, FIG. 27 is a schematic diagram that illustrates a transmission limitation on a flexible resource according to an exemplary embodiment of the present disclosure. Referring to FIG. 27, a UE is configured with duplex mode. A resource may be indicated as a flexible resource by a higher layer configuration. However, the UE may miss DCI format 2_0. Then, if the flexible resource is configured, the UE may not transmit SRS, PUCCH, PUSCH, and/or PRACH.

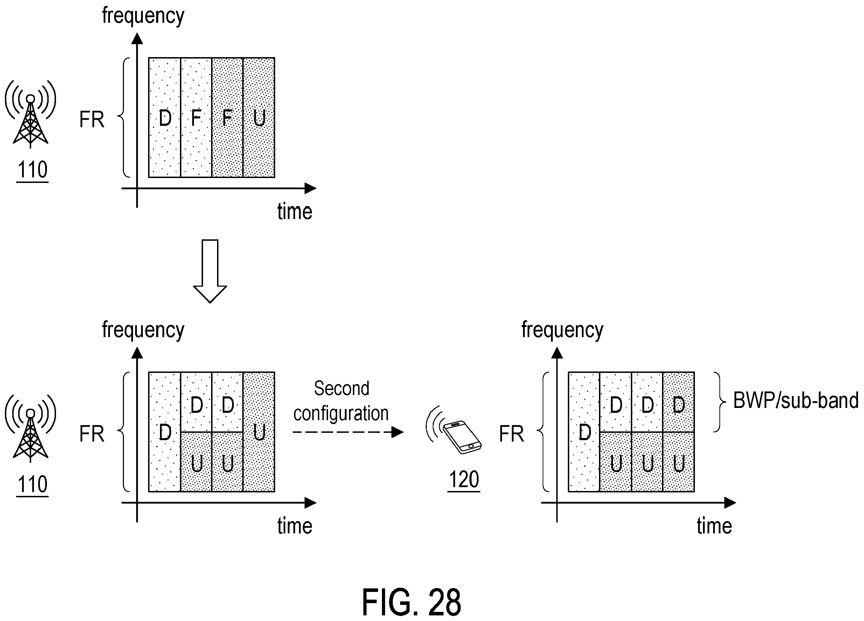

For example, FIG. 28 is a schematic diagram that illustrates a transmission direction setting for BWP according to an exemplary embodiment of the present disclosure. Referring to FIG. 28, in one embodiment, the aforementioned second configuration could be BWP/sub-band-specific configuration.

In one embodiment, regarding BWP specific configuration, a UE may be configured a first sub-band, for example, a first BWP, and a second sub-band, for example, a second BWP, within a frequency range, for example, a serving cell. The UE may be configured with a parameter of *tdd-UL-DL-ConfigurationDedicated_first_sub-band* (i.e., the second configuration), and the parameter may override only flexible symbols per slot over the number of slots as provided by *tdd-UL-DL-ConfigurationCommon* (i.e., the first configuration) in the first sub-band. The UE may be configured with a parameter of *tdd-UL-DL-ConfigurationDedicated_second_ sub-band* (i.e., the second configuration), and the parameter may override only flexible symbols per slot over the number of slots as provided by *tdd-UL-DL-ConfigurationCommon* (i.e., the first configuration) in the second sub-band.

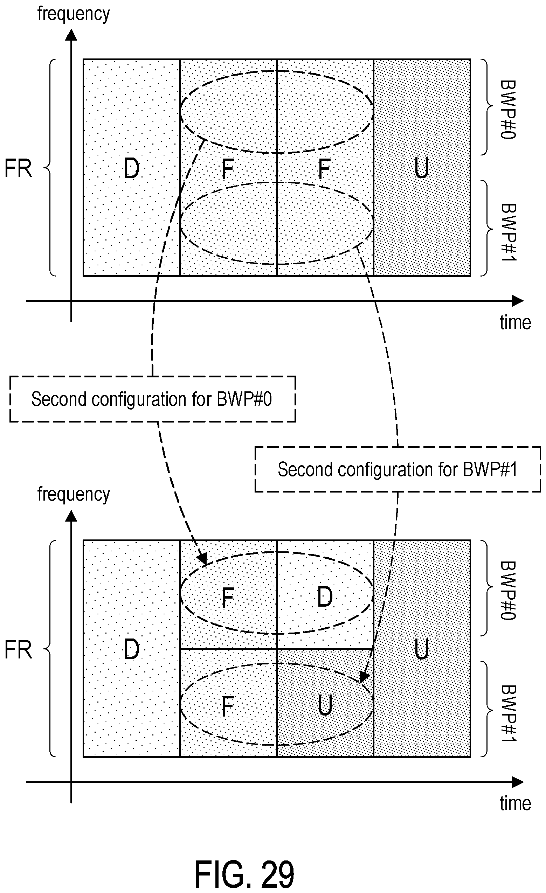

For example, FIG. 29 is a schematic diagram that illustrates a BWP-specific UL-DL configuration according to an exemplary embodiment of the present disclosure. Referring to FIG. 29, in the upper drawing, *tdd-UL-DL-ConfigurationCommon* (i.e., the first configuration) provides parameters for both bandwidth parts BWP#0 and BWP#1. In the lower drawing, the second configuration for BWP#0 could be *tdd-UL-DL-ConfigurationDedicated_first_sub-band,* and the second configuration for BWP#1 could be *tdd-UL-DL-ConfigurationDedicated_second_sub-band.*

In one embodiment, a UE may communicate with a network device in a first BWP, for example, an active BWP, and may detect a DCI format 2_0 in the first BWP within a frequency range, for example, a serving cell. An SFI-index field of the DCI format 2_0 may be applied for the first BWP only.

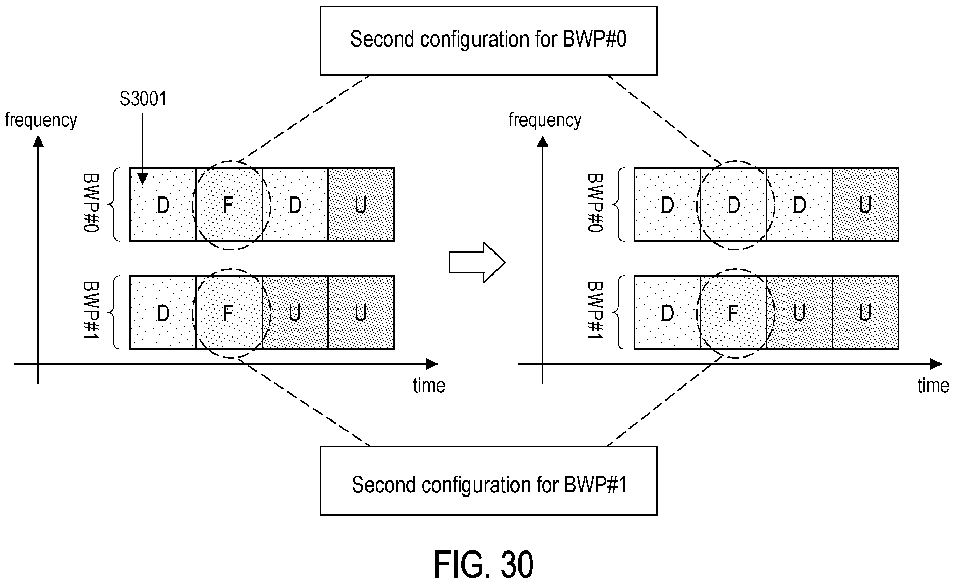

For example, FIG. 30 is a schematic diagram that illustrates a BWP-specific slot format indicator (SFI) configuration according to an exemplary embodiment of the present disclosure. Referring to FIG. 30, in step S3001, a UE may detect DCI format 2_0 in bandwidth part BWP#0. The second configuration for BWP#0 could be DCI format 2_0 for BWP#0 including a SFI-index field. Then, the SFI-index field of DCI format 2_0 for BWP#0 may override flexible resource to DL resource. However, the SFI-index field of DCI format 2_0 for BWP#0 may not be applied to the bandwidth part BWP#1. Merely second configuration for BWP#1 may be applied to the bandwidth part BWP#1.

Regarding cell-specific/UE-specific UL-DL configuration, in one embodiment, the following may be applicable for a frequency range such as a serving cell. If a UE is provided *tdd-UL-DL-ConfigurationCommon,* the UE may set the slot format per slot over a number of slots as indicated by *tdd-UL-DL-ConfigurationCommon.* If the UE is additionally provided *tdd-UL-DL-ConfigurationDedicated,* the parameter *tdd-UL-DL-ConfigurationDedicated* may override only flexible symbols per slot over the number of slots as provided by *tdd-UL-DL-ConfigurationCommon.* It means that the third transmission direction would be the second direction only when the first transmission direction is flexible.

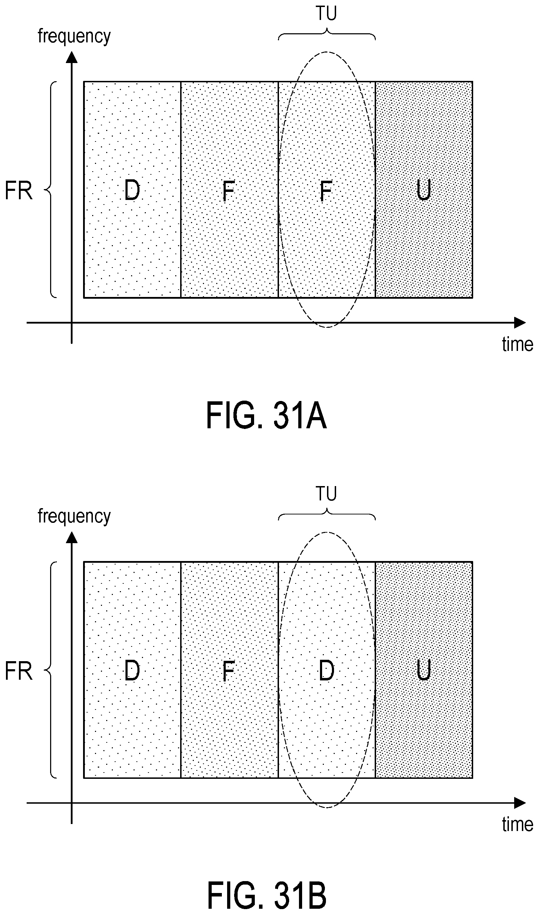

For example, FIG. 31A and FIG. 31B are schematic diagrams that illustrate cell-specific/UE-specific UL-DL configuration according to an exemplary embodiment of the present disclosure. Referring to FIG. 31A and FIG. 31B, the flexible resource provided by *tdd-UL-DL-ConfigurationCommon* may be overridden as DL resource by *tdd-UL-DL-ConfigurationDedicated.*

In one embodiment, a UE may be configured with a first BWP and a second BWP, and the UE may operate in the first BWP, for example, an active BWP. The UE may detect a DCI format 2_0 (i.e., the second configuration) in the first BWP, and the SFI-index field of the DCI format 2_0 may indicate slot format separately for the first BWP and the second BWP.

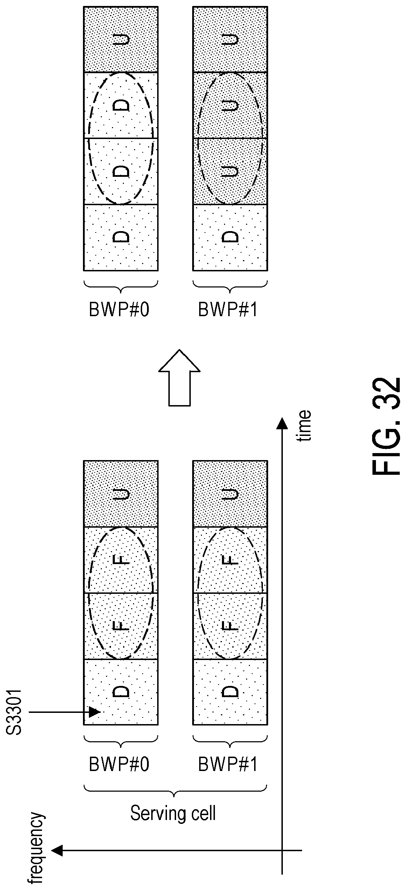

For example, FIG. 32 is a schematic diagram that illustrates a dynamic indication according to an exemplary embodiment of the present disclosure. Referring to FIG. 32, in step S3301, a UE may detect DCI format 2_0 in bandwidth part BWP#0, and the SFI-index field may include first information, for example, indicating overriding flexible resource to DL resource, applied to BWP#0 and second information, for example, indicating overriding flexible resource to UL resource, applied to BWP#1.

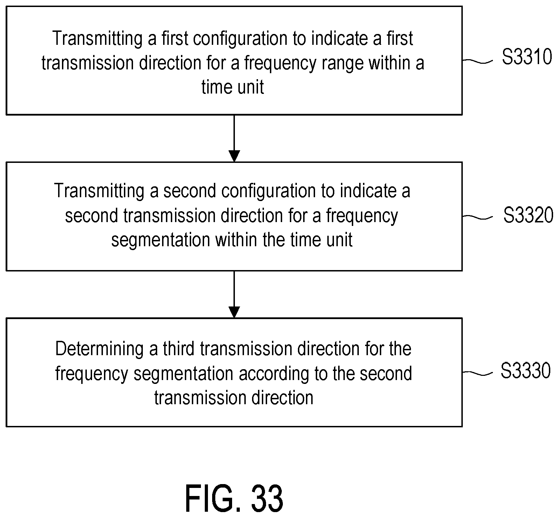

FIG. 33 is a flow chart of a transmission direction setting method according to an exemplary embodiment of the present disclosure. Referring to FIG. 33, the method is adapted for a network device. The network device transmits a first configuration to indicate a first transmission direction for a frequency range within a time unit (S3310). In one embodiment, the first configuration may be a higher layer configuration such as *tdd-UL-DL-ConfigurationCommon, tdd-UL-DL-ConfigurationDedicated,* or other configurations used for setting transmission direction. In one embodiment, the first transmission direction may be, for example, DL, UL, flexible, or blank. In one embodiment, the frequency range may be, for example, a serving cell, a sub-band such as BWP of the serving cell, or a range of resource blocks (RBs) provided by a network device. In one embodiment, the time unit is one or more timeslots or one or more symbols.

The network device transmits a second configuration to indicate a second transmission direction for a frequency segmentation within the time unit (Step S3320). In one embodiment, the second configuration may be a higher layer configuration such as *tdd-UL-DL-ConfigurationDedicated,* or other configurations used for setting transmission direction. In one embodiment, the second configuration may be a downlink control information (DCI). For example, DCI format 2_0. In one embodiment, the second transmission direction may be, for example, DL, UL, flexible, or blank. The frequency segmentation consists of one resource block (RB) or a set of consecutive RBs, and the frequency segmentation is a part of the frequency range. The frequency segmentation may be less than the frequency range.

The network device determines a third transmission direction for the frequency segmentation according to the second transmission direction (Step S3330).

In one embodiment, the network device may determine the third transmission direction for the frequency segmentation as DL when the first transmission direction is flexible and the second transmission direction is DL, or when the first transmission direction is DL and the second transmission direction is DL, or when the first transmission direction is UL and the second transmission direction is DL.

In one embodiment, the network device may determine the third transmission direction for the frequency segmentation as UL when the first transmission direction is flexible and the second transmission direction is UL, or when the first transmission direction is UL and the second transmission direction is UL, or when the first transmission direction is DL and the second transmission direction is UL.

In one embodiment, the network device may determine the third transmission direction for the frequency segmentation as flexible, when the first transmission direction is flexible and the second transmission direction is flexible, or when the first transmission direction is UL and the second transmission direction is flexible, or when the first transmission direction is the DL and the second transmission direction is flexible.

In one embodiment, the network device may determine the third transmission direction for the frequency segmentation as blank when the first transmission direction is flexible and the second transmission direction is blank, or when the first transmission direction is UL and the second transmission direction is blank, or when the first transmission direction is DL and the second transmission direction is blank.

In one embodiment, the frequency segmentation occupies a range from a first RB to a second RB, the first RB and the second RB are with reference to common resource block (CRB) grid, and the second configuration comprises at least one of an RB index of the first RB and an RB index of the second RB.

In one embodiment, the second configuration further indicates a fourth transmission direction for another frequency segmentation within the time slot, and an overlap between the frequency segmentation and the another frequency segmentation is absent in frequency domain. The network device may determine a fifth transmission direction for the another frequency segmentation according to the fourth transmission direction.

In one embodiment, a network device may configure a slot format table, wherein the slot format table comprises a plurality of transmission directions for a symbol, and a number of the plurality of transmission directions is associated with a number of frequency segmentations.

In one embodiment, a network device may configure a slot format combination table, wherein at least two values within the slot format combination table are used for a slot, and a number of the at least two values is associated with a number of frequency segmentations.

The detail description of embodiments of the network device may refer to the aforementioned embodiments adapted for UE and would be omitted.

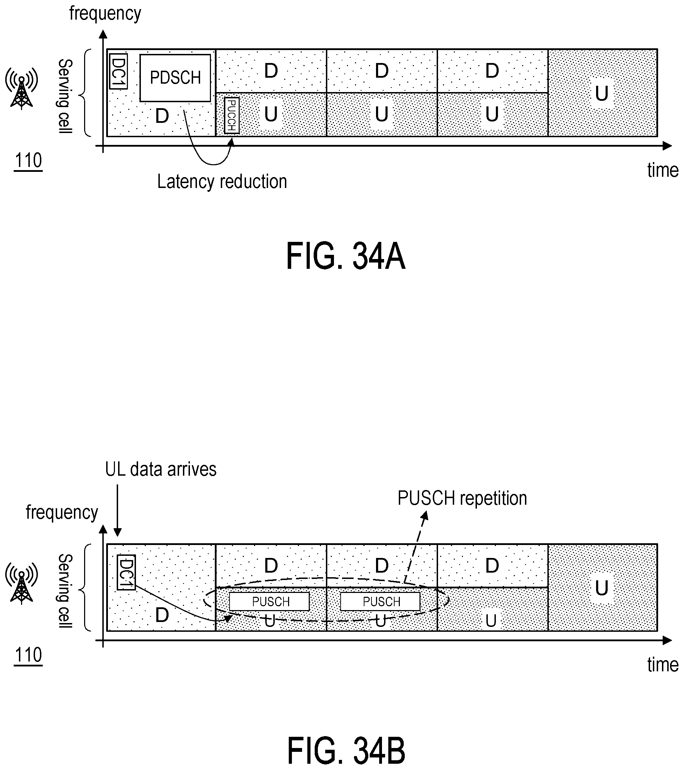

FIG. 34A is a schematic diagram that illustrates latency reduction according to an exemplary embodiment of the present disclosure. Referring to FIG. 34A, if a PSSCH is transmitted, a network device of embodiments of the present disclosure may wait for merely one timeslot, and then HARQ feedback would be received on a PUCCH. Therefore, the latency of feedback delay may be reduced.

FIG. 34B is a schematic diagram that illustrates scheduling reduction and coverage enhancement according to an exemplary embodiment of the present disclosure. Referring to FIG. 34B, if UL data would like to be transmitted, a network device of embodiments of the presnt disclosure may schedule an UL resource by a DCI for the UL data, in which the UL resource is at a duration of one timeslot away from the timeslot where the DCI is scheduled, so as to reduce UL scheduling delay. Furthermore, PUSCH repetition could be provided to enhance UL coverage.

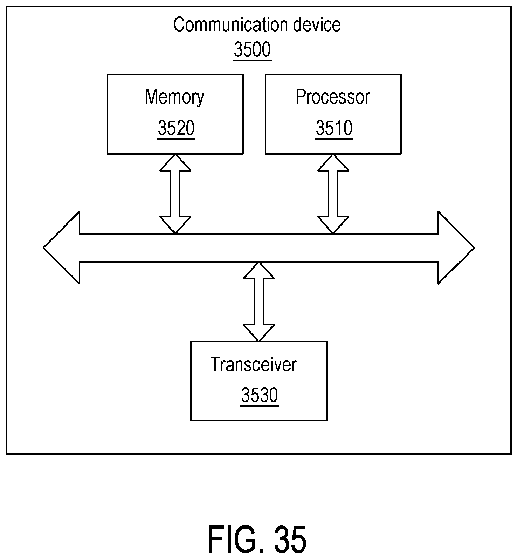

FIG. 35 is a block diagram that illustrates a communication device 3500 according to an exemplary embodiment of the present disclosure. Referring to FIG. 35, the communication device 3500 may be a UE or a network device. The communication device 3500 may include, but is not limited thereto a processor 3510. The processor 3510 (e.g., having processing circuitry) may include an intelligent hardware device, e.g., a Central Processing Unit (CPU), a microcontroller, an ASIC, and etc. The processor 3510 can call and run a computer program from a memory to implement the method in the embodiment of the disclosure.

Since the program code stored in the communication device 3500 adopts all the technical solutions of all the foregoing embodiments when being executed by the processor 3510, it at least has all the advantageous effects brought by all the technical solutions of all the foregoing embodiments, and no further description is incorporated herein.

Optionally, as shown in FIG. 35, the communication device 3500 may further include a memory 3520. The memory 3500 may include computer-storage media in the form of volatile and/or non-volatile memory. The memory 3500 may be removable, non-removable, or a combination thereof. Exemplary memory includes solid-state memory, hard drives, optical-disc drives, and etc. The processor 3510 may call and run a computer program from the memory 520 to implement the method in the embodiment of the disclosure.

The memory 3520 may be a separate device independent of the processor 3510, or may be integrated in the processor 3510.

Optionally, as shown in FIG. 35, the communication device 3500 may further include a transceiver 3530, and the processor 3510 may control the transceiver 3530 to communicate with other devices. The transceiver 3500 having a transmitter (e.g., transmitting/transmission circuitry) and a receiver (e.g., receiving/reception circuitry) may be configured to transmit and/or receive time and/or frequency resource partitioning information. In some implementations, the transceiver 3500 may be configured to transmit in different types of subframes and slots including, but not limited to, usable, non-usable and flexibly usable subframes and slot formats. The transceiver 3500 may be configured to receive data and control channels.

Specifically, the transceiver 3530 may send information or data to other devices, or receive information or data sent by other devices.

Specifically, the transceiver 3530 may include a transmitter and a receiver. The transceiver 3530 may further include an antenna, and the number of antennas may be one or more.

Optionally, the communication device 3500 may specifically be a network device in an embodiment of the disclosure, and the communication device 3500 may implement the corresponding process implemented by the network device in various methods of the embodiment of the disclosure. For the conciseness, related descriptions are omitted.

Optionally, the communication device 3500 may specifically be a mobile terminal, a terminal device, or a UE in an embodiment of the disclosure, and the communication device 3500 may implement the corresponding process implemented by the mobile terminal, the terminal device, or the UE in various methods in the embodiment of the disclosure. For conciseness, related description is omitted.

In summary, in the transmission direction setting method, the user equipment, and the network device of the embodiments of the disclosure, a frequency range, such as a serving cell or a BWP of the serving cell, may be split into multiple frequency segmentations as indicated in TDD configuration, to achieve full duplex. Furthermore, parameters provided by a second configuration such as a higher layer configuration or DCI may override parameters provided by a first configuration. Therefore, UL coverage may be enhanced, feedback or scheduling latency may be reduced, and configuration flexibility for NR TDD operation in an unpaired spectrum may be improved.

## Claims

1. A transmission direction setting method, adapted for a user equipment (UE) (120, 3500), **characterized in that** the method comprises:
receiving a first configuration to indicate a first transmission direction for a frequency range (FR) within a time unit (TU, TU1, TU2);
receiving a second configuration to indicate a second transmission direction for a frequency segmentation (FS1, FS2, FS12, FS22) within the time unit (TU, TU1, TU2), wherein the frequency segmentation (FS1, FS2, FS12, FS22) consists of one resource block, named RB hereinafter, or a set of consecutive RBs and is a part of the frequency range (FR); and
determining a third transmission direction for the frequency segmentation (FS1, FS2, FS12, FS22) according to the second transmission direction.

2. The method according to claim 1, wherein the frequency segmentation (FS1, FS2, FS12, FS22) occupies a range from a first RB to a second RB, the first RB and the second RB are with reference to common resource block, named CRB hereinafter, grid, and the second configuration comprises at least one of an RB index of the first RB and an RB index of the second RB.

3. The method according to claim 1 or 2, wherein the frequency range (FR) is a serving cell or a bandwidth part, named BWP hereinafter, (BWP, BWP#1, BWP#2) of the serving cell.

4. The method according to any one of claims 1-3, further comprise:
determining the third transmission direction for the frequency segmentation (FS1, FS2, FS12, FS22) as downlink, named DL hereinafter, when the first transmission direction is flexible and the second transmission direction is DL, or when the first transmission direction is the DL and the second transmission direction is the DL, or when the first transmission direction is uplink, nmed UL hereinafter, and the second transmission direction is the DL.

5. The method according to any one of claims 1-3, further comprise:
determining the third transmission direction for the frequency segmentation (FS1, FS2, FS12, FS22) as UL, when the first transmission direction is flexible and the second transmission direction is the UL, or when the first transmission direction is the UL and the second transmission direction is the UL, or when the first transmission direction is DL and the second transmission direction is the UL.

6. The method according to any one of claims 1-3, further comprise:
determining the third transmission direction for the frequency segmentation (FS1, FS2, FS12, FS22) as flexible, when the first transmission direction is the flexible and the second transmission direction is the flexible, or when the first transmission direction is UL and the second transmission direction is the flexible, or when the first transmission direction is the DL and the second transmission direction is the flexible.

7. The method according to any one of claims 1-3, further comprise:
determining the third transmission direction for the frequency segmentation (FS1, FS2, FS12, FS22) as blank, when the first transmission direction is the flexible and the second transmission direction is the blank, or when the first transmission direction is UL and the second transmission direction is the blank, or when the first transmission direction is the DL and the second transmission direction is the blank.

8. The method according to claim 7, further comprising:
muting a DL reception and/or a UL transmission within the frequency segmentation (FS1, FS2, FS12, FS22) when the third transmission direction for the frequency segmentation (FS1, FS2, FS12, FS22) is determined as the blank.

9. The method according to claim 8, further comprising:
receiving a blank pattern, wherein the blank pattern indicates whether one of a set of time units (TU, TU1, TU2) is determined as the blank.

10. The method according to any one of claims 1-9, wherein the second configuration further indicates a fourth transmission direction for another frequency segmentation (FS1, FS2, FS12, FS22) within the time unit (TU, TU1, TU2), an overlap between the frequency segmentation (FS1, FS2, FS12, FS22) and the another frequency segmentation (FS1, FS2, FS12, FS22) is absent in frequency domain, and the method further comprises:
determining a fifth transmission direction for the another frequency segmentation (FS1, FS2, FS12, FS22) according to the fourth transmission direction.

11. The method according to any one of claims 1-10, wherein the first configuration is a higher layer configuration.

12. The method according to any one of claims 1-11, wherein the second configuration is a higher layer configuration.

13. The method according to any one of claims 1-11, wherein the second configuration is a downlink control information, named DCI).

14. The method according to claim 13, further comprising:
configuring a slot format table, wherein the slot format table comprises a plurality of transmission directions for a symbol (symbol#0∼symbol#13), and a number of the plurality of transmission directions is associated with a number of frequency segmentations (FS1, FS2, FS12, FS22).

15. The method according to claim 13, further comprising:
configuring a slot format combination table, wherein at least two values within the slot format combination table are used for a slot, and a number of the at least two values is associated with a number of frequency segmentations (FS1, FS2, FS12, FS22).

16. The method according to claim 6, further comprising:
disabling receiving a DL signal when the transmission direction for the frequency segmentation (FS1, FS2, FS12, FS22) is determined as the flexible and a duplex mode is configured.

17. The method according to claim 6, further comprising:
disabling transmitting an UL signal when the transmission direction for the frequency segmentation (FS1, FS2, FS12, FS22) is determined as the flexible and a duplex mode is configured.

18. A user equipment, maned UE hereinafter (120, 3500), comprising:
a transceiver (3530), used for transmitting or receiving signals;
a memory (3520), used for storing a program code; and
a processor (3510), coupled to the transceiver (3530) and the memory (3520), and **characterized in that** the processor (3510) is configured for executing the program code to:
receive, through the transceiver (3530), a first configuration to indicate a first transmission direction for a frequency range (FR) within a time unit (TU, TU1, TU2);
receive, through the transceiver (3530), a second configuration to indicate a second transmission direction for a frequency segmentation (FS1, FS2, FS12, FS22) within the time unit (TU, TU1, TU2), wherein the frequency segmentation (FS1, FS2, FS12, FS22) consists of one resource block, named RB hereinafter, or a set of consecutive RBs and is a part of the frequency range (FR); and
determine a third transmission direction for the frequency segmentation (FS1, FS2, FS12, FS22) according to the second transmission direction.

19. The UE (120, 3500) according to claim 18, wherein the frequency segmentation (FS1, FS2, FS12, FS22) occupies a range from a first RB to a second RB, the first RB and the second RB are with reference to common resource block, named CRB hereinafter, grid, and the second configuration comprises at least one of an RB index of the first RB and an RB index of the second RB.

20. The UE (120, 3500) according to claim 18 or 19, wherein the frequency range (FR) is a serving cell or a bandwidth part, named BWP hereinafter, (BWP, BWP#1, BWP#2) of the serving cell.

21. The UE (120, 3500) according to any one of claims 18-20, wherein the processor (3510) is further configured to:
determine the third transmission direction for the frequency segmentation (FS1, FS2, FS12, FS22) as downlink, named DL hereinafter, when the first transmission direction is flexible and the second transmission direction is DL, or when the first transmission direction is the DL and the second transmission direction is the DL, or when the first transmission direction is uplink, named UL hereinafter, and the second transmission direction is the DL.

22. The UE (120, 3500) according to any one of claims 18-20, wherein the processor (3510) is further configured to:
determine the third transmission direction for the frequency segmentation (FS1, FS2, FS12, FS22) as UL, when the first transmission direction is flexible and the second transmission direction is the UL, or when the first transmission direction is the UL and the second transmission direction is the UL, or when the first transmission direction is DL and the second transmission direction is the UL.

23. The UE (120, 3500) according to any one of claims 18-20, wherein the processor (3510) is further configured to:
determine the third transmission direction for the frequency segmentation (FS1, FS2, FS12, FS22) as flexible, when the first transmission direction is the flexible and the second transmission direction is the flexible, or when the first transmission direction is UL and the second transmission direction is the flexible, or when the first transmission direction is the DL and the second transmission direction is the flexible.

24. The UE (120, 3500) according to any one of claims 18-20, wherein the processor (3510) is further configured to:
determine the third transmission direction for the frequency segmentation (FS1, FS2, FS12, FS22) as blank, when the first transmission direction is the flexible and the second transmission direction is the blank, or when the first transmission direction is UL and the second transmission direction is the blank, or when the first transmission direction is the DL and the second transmission direction is the blank.

25. The UE (120, 3500) according to claim 24, wherein the processor (3510) is further configured to:
mute, through the transceiver (3530), a DL reception and/or a UL transmission within the frequency segmentation (FS1, FS2, FS12, FS22) when the third transmission direction for the frequency segmentation (FS1, FS2, FS12, FS22) is determined as the blank.

26. The UE (120, 3500) according to claim 24, wherein the processor (3510) is further configured to:
receive, through the transceiver (3530), a blank pattern, wherein the blank pattern indicates whether one of a set of time units (TU, TU1, TU2) is determined as the blank.

27. The UE (120, 3500) according to any one of claims 18-26, wherein the second configuration further indicates a fourth transmission direction for another frequency segmentation (FS1, FS2, FS12, FS22) within the time slot, an overlap between the frequency segmentation (FS1, FS2, FS12, FS22) and the another frequency segmentation (FS1, FS2, FS12, FS22) is absent in frequency domain, and the processor (3510) is further configured to:
determine a fifth transmission direction for the another frequency segmentation (FS1, FS2, FS12, FS22) according to the fourth transmission direction.

28. The UE (120, 3500) according to any one of claims 18-27, wherein the first configuration is a higher layer configuration.

29. The UE (120, 3500) according to any one of claims 18-28, wherein the second configuration is a higher layer configuration.

30. The UE (120, 3500) according to any one of claims 18-28, wherein the resource configuration is a downlink control information, named DCI.

31. The UE (120, 3500) according to claim 30, wherein the processor (3510) further configured to:
configure a slot format table, wherein the slot format table comprises a plurality of transmission directions for a symbol (symbol#0∼symbol#13), and a number of the plurality of transmission directions is associated with a number of frequency segmentations (FS1, FS2, FS12, FS22).

32. The UE (120, 3500) according to claim 30, wherein the processor (3510) further configured to:
configure a slot format combination table, wherein at least two values within the slot format combination table are used for a slot, and a number of the at least two values is associated with a number of frequency segmentations (FS1, FS2, FS12, FS22).

33. The UE (120, 3500) according to claim 23, wherein the processor (3510) is further configured to:
disable receive, through the transceiver (3530), a DL signal when the transmission direction for the frequency segmentation (FS1, FS2, FS12, FS22) is determined as the flexible and a duplex mode is configured.

34. The UE (120, 3500) according to claim 23, wherein the processor (3510) is further configured to:
disable transmit, through the transceiver (3530), an UL signal when the transmission direction for the frequency segmentation (FS1, FS2, FS12, FS22) is determined as the flexible and a duplex mode is configured.

35. A transmission direction setting method, adapted for a network device (110, 3500), characteriazed in that the method comprises:
transmitting a first configuration to indicate a first transmission direction for a frequency range (FR) within a time unit (TU, TU1, TU2);
transmitting a second configuration to indicate a second transmission direction for a frequency segmentation (FS1, FS2, FS12, FS22) within the time unit (TU, TU1, TU2), wherein the frequency segmentation (FS1, FS2, FS12, FS22) consists of one resource block, named RB hereinafter, or a set of consecutive RBs and is a part of a frequency range (FR); and
determining a third transmission direction for the frequency segmentation (FS1, FS2, FS12, FS22) according to the second transmission direction.

36. A network device (110, 3500), comprising:
A transceiver (3530), used for transmitting or receiving signals;
a memory (3520), used for storing a program code; and
a processor (3510), coupled to the transceiver (3530) and the memory (3520), and **characterized in that** the processor (3510) is configured for executing the program code to:
transmit, through the transceiver (3530), a first configuration to indicate a first transmission direction for a frequency range (FR) within a time unit (TU, TU1, TU2);
transmit, through the transceiver (3530), a second configuration to indicate a second transmission direction for a frequency segmentation (FS1, FS2, FS12, FS22) within the time unit (TU, TU1, TU2), wherein the frequency segmentation (FS1, FS2, FS12, FS22) consists of one resource block, named RB hereinafter, or a set of consecutive RBs and is a part of a frequency range (FR); and
determine a third transmission direction for the frequency segmentation (FS1, FS2, FS12, FS22) according to the second transmission direction.
